# EUROPEAN PATENT SPECIFICATION

(11) **EP 3 699 204 B1**
(45) Date of publication and mention of the grant of the patent: **25.12.2024**
(21) Application number: 18868076.3
(22) Date of filing: 11.10.2018
(51) Int. Cl.: C08F 210/00, B60C 1/00, C08F 212/00, C08F 236/20, C08F 4/54, C08F 210/02

(54) **MULTI-COPOLYMER, RUBBER COMPOSITION, CROSS-LINKED RUBBER COMPOSITION, RUBBER ARTICLE, AND TIRE**
MULTI-COPOLYMER, KAUTSCHUKZUSAMMENSETZUNG, VERNETZTE KAUTSCHUKZUSAMMENSETZUNG, KAUTSCHUKARTIKEL UND REIFEN
MULTI-COPOLYMÈRE, COMPOSITION DE CAOUTCHOUC, COMPOSITION DE CAOUTCHOUC RÉTICULÉ, ARTICLE EN CAOUTCHOUC ET PNEU

(30) Priority: 20.10.2017 JP 2017203849
(43) Date of publication of application: 26.08.2020
(73) Proprietor: Bridgestone Corporation, Tokyo 104-8340 (JP)
(72) Inventor: TARDIF, Olivier, Tokyo 104-8340 (JP); HORIKAWA, Yasuo, Tokyo 104-8340 (JP)
(74) Representative: Marks & Clerk LLP
(86) International application number: PCT/JP2018/037922
(87) International publication number: WO 2019/078083

(56) References cited:
- EP-A1- 0 509 396
- WO-A1-98/31745
- JP-A- 2000 159 837
- JP-A- 2003 518 173
- JP-A- H08 143 712
- JP-A- H1 180 269
- JP-A- H11 189 620
- US-A- 4 469 847
- ZHAOMIN HOU: "Half-Sandwich Rare Earth Metal Catalysts for Olefin Polymerization and Copolymerization", JOURNAL OF SYNTHETIC ORGANIC CHEMISTRY, JAPAN, vol. 63, no. 11, 1 January 2005 (2005-01-01), pages 1124 - 1136, XP055687646, ISBN: 0037-9980, DOI: 10.5059/yukigoseikyokaishi.63.1124
- XIAOFANG LI ET AL.: "Scandium-Catalyzed Copolymerization of Ethylene with Dicyclopentadiene and Terpolymerization of Ethylene, Dicyclopentadiene, and Styrene", MACROMOLECULES, vol. 38, no. 16, 2005, pages 6767 - 6769, XP001234826, DOI: 10.1021/ma051323o
- ZHAOMIN HOU ET AL.: "Scandium and Yttrium complexes for well-controlled polymerization", MATERIALS INTEGRATION, vol. 21, no. 1, 2008, pages 34 - 42, XP009520042, ISSN: 1344-7858

## Description

### Technical Field

The present invention relates to a multicomponent copolymer, a rubber composition, a crosslinked rubber composition, a rubber product and a tire.

### Background Art

Generally, rubber products (tires, conveyor belts, vibration-proof rubbers, seismic isolation rubbers, etc.) are required to have high strength and weather resistance, and various rubber components and rubber compositions have been developed for satisfying such requirements.

For example, PTL 1, having an object of providing a pneumatic tire excellent in ozone resistance and appearance and a method for producing it, describes a pneumatic tire having, on the surface of the tire, an ozone-resistant thin film layer of a rubber composition formed through vulcanization of an unvulcanized rubber composition containing, as a main component, an ethylene/propylene/diene tercopolymer rubber (hereinafter referred to as "EPDM").

PTL 2 relates to a rubber composition for a tire.

PTL 3 relates to an aromatic vinyl compound-olefin-nonconjugated diene copolymer and a method for producing the same.

PTL 4 relates to an ethylene-based copolymer and a method for producing the same.

PTL 5 relates to an elastomer blend composition obtained by crosslinking a mixture of an ethylene / α-olefin / aromatic vinyl compound / non-conjugated diene copolymer and an elastomer.

PTL 6 relates to an unsaturated copolymer, a method for producing the same, and a composition containing the copolymer.

NPL 1 relates to the synthesis and polymerization catalysis of rare earth metal bis (alkyl) complexes bearing mono (cyclopentadienyl) ligands.

NPL 2 relates to scandium-catalyzed copolymerization of ethylene with dicyclopentadiene and terpolymerization of ethylene, cicyclopentadiene, and styrene.

NPL 3 relates to scandium and yttrium complexes for controlling polymerization.

### Citation List

### Patent Literature

PTL 1: JP 11-58548A
PTL 2: WO 98/31745 A1
PTL 3: JP 2000-159837 A
PTL 4: JP H 11-189620 A
PTL 5: JP H 08-143712 A
PTL 6: JP H 11-80269 A

### Non-Patent Literature

NPL 1: Zhaomin Hou, Half-Sandwich Rare Earth Metal Catalysts for Olefin Polymerization and Copolymerization, Journal of Synthetic Organic Chemistry, 2005, Volume 63, Issue 11, Pages 1124-1136
NPL 2: Xiaofang Li and Zhaomin Hou, Scandium-Catalyzed Copolymerization of Ethylene with Dicyclopentadiene and Terpolymerization of Ethylene, Dicyclopentadiene, and Styrene, Macromolecules, 2005, Volume 38, Issue 16, Pages 6767-6769
   DOI: 10.1021/ma051323o
NPL 3: Zhaomin Hou et al., "Scandium and Yttrium complexes for well-controlled polymerization", Materials Integration, 2008, Volume 21, Issue 1, Pages 34 - 42

### Summary of Invention

### Technical Problem

An object of the present invention is to provide a multicomponent copolymer which is used for the purpose of producing a crosslinked rubber composition and a rubber product having high weather resistance (ozone resistance) and having a higher strength than when EPDM is used, and to provide a method for producing the multicomponent copolymer. Another object of the present invention is to provide a rubber composition containing the multicomponent copolymer, a crosslinked rubber composition obtained by crosslinking the rubber composition, and a rubber product and a tire using the rubber composition or the crosslinked rubber composition.

### Solution to Problem

The present inventors have assiduously studied and, as a result, have found that, by using a multicomponent copolymer which contains a non-conjugated polyene unit, a non-conjugated olefin unit and an aromatic vinyl unit and in which the non-conjugated olefin unit is an ethylene unit alone, the non-conjugated polyene unit comprises at least one selected from a group consisting of a vinylnorbornene unit and an ethylidene-norbornene unit, the aromatic vinyl unit comprises a styrene unit, the content of the non-conjugated polyene unit is 1% by mass or more and 20% by mass or less, the content of the non-conjugated olefin unit is more than 50% by mass and 94% by mass or less, and the content of the aromatic vinyl unit is 5% by mass or more and less than 30% by mass, the above-mentioned problem can be solved.

Specifically, the present invention relates to the following <1> to <11>.
<1> A multicomponent copolymer comprising a non-conjugated polyene unit, a non-conjugated olefin unit and an aromatic vinyl unit, wherein:
   the non-conjugated olefin unit is an ethylene unit alone,
   the non-conjugated polyene unit comprises at least one selected from a group consisting of a vinylnorbornene unit and an ethylidene-norbornene unit,
   the aromatic vinyl unit comprises a styrene unit,
   the content of the non-conjugated polyene unit is 1% by mass or more and 20% by mass or less,
   the content of the non-conjugated olefin unit is more than 50% by mass and 94% by mass or less,
   the content of the aromatic vinyl unit is 5% by mass or more and less than 30% by mass, and
   a melting point of the multicomponent copolymer measured through differential scanning calorimetry according to JIS K 7121:1987 is 50°C or higher.
<2> The multicomponent copolymer according to <1>, wherein the weight-average molecular weight of the multicomponent copolymer is 5,000 to 1,000,000.
<3> The multicomponent copolymer according to <1> or <2> , wherein a crystallinity of the multicomponent copolymer is 0.5 to 50%.
<4> A rubber composition comprising the multicomponent copolymer of any one of <1> to <3>.
<5> A crosslinked rubber composition produced by crosslinking the rubber composition of <4>.
<6> A rubber product using the rubber composition of <4> or the crosslinked rubber composition of <5>.
<7> A tire using the rubber composition of <4> or the crosslinked rubber composition of <5>.

### Advantageous Effects of Invention

According to the present invention, there can be provided a multicomponent copolymer which is used for the purpose of producing a crosslinked rubber composition and a rubber product having high weather resistance and having a higher strength than when EPDM is used, and a method for producing the multicomponent copolymer. Further, according to the present invention, there can be provided a rubber composition containing the multicomponent copolymer, a crosslinked rubber composition obtained by crosslinking the rubber composition, and a rubber product and a tire using the rubber composition or the crosslinked rubber composition.

### Description of Embodiments

Hereinunder the present invention is described in detail with reference to embodiments thereof. In the following description, the expression of "A to B" to indicate a numerical range represents the numerical range including the end points A and B, and represents "A or more and B or less" (in the case of A < B) or "A or less and B or more" in the case of A > B).

Part by mass and % by mass are the same as part by weight and % by weight, respectively.

### [Multicomponent Copolymer]

The multicomponent copolymer of the present invention contains a non-conjugated polyene unit, a non-conjugated olefin unit and an aromatic vinyl unit, wherein the content of the aromatic vinyl unit is 5% by mass or more and less than 30% by mass.

Here in this description, "non-conjugated polyene unit" means a unit corresponding to the structural unit derived from a non-conjugated polyene compound in the multicomponent copolymer, "non-conjugated olefin unit" means a unit corresponding to the structural unit derived from a non-conjugated olefin compound in the multicomponent copolymer, and "aromatic vinyl unit" means a unit corresponding to the structural unit derived from an aromatic vinyl compound in the multicomponent copolymer.

Also in this description, "non-conjugated polyene compound" means a compound of a non-conjugated system having 2 or more carbon-carbon double bonds in one molecule, "non-conjugated olefin compound" means an aliphatic unsaturated hydrocarbon compound, a compound of a non-conjugated system having one or more carbon-carbon double bonds, and "aromatic vinyl compound" means an aromatic hydrocarbon compound substituted with one vinyl compound.

Further in this description, "main chain" indicates a long-chain moiety to bond the bonding terminals of each unit in the multicomponent copolymer, and may be linear or branched, depending on the chain structure of the multicomponent copolymer. Specifically, "main chain" does not include a branched moiety not bonding to the neighboring unit, in each unit that constitutes the multicomponent copolymer.

With that, in this description, "multicomponent copolymer" means a copolymer produced by polymerizing three kinds or more monomers.

Heretofore, as rubbers excellent in weather resistance, there are known olefinic rubbers (for example, EPDM (ethylene-propylene-non-conjugated diene rubber). As a result of assiduous studies, the present inventors have found that, though excellent in weather resistance (ozone resistance), these olefinic rubbers are inferior to dienic rubbers in point of fracture strength. In addition, the olefinic rubbers are poorly miscible with dienic rubbers, and therefore even though an olefinic rubber is mixed with a dienic rubber, it is still difficult to satisfy both weather resistance and fracture strength, and application of the mixture to rubber products such as tires and others is limitative.

The present inventors have found that, by using a specific multicomponent copolymer, a rubber composition excellent in terms of fracture strength (fracture performance) while maintaining high weather resistance can be obtained, and have completed the present invention.

The detailed mechanism of attaining the above-mentioned advantageous effects is, though not clear, presumed as follows. The multicomponent copolymer of the present invention does not contain an ethylenic unsaturated group in the main chain and therefore keeps high weather resistance. On the other hand, by the non-conjugated polyene unit therein, an ethylenic unsaturated group is introduced into the multicomponent copolymer, in which the ethylenic unsaturated group can function as a crosslinking point in crosslinking reaction.

In addition, it is presumed that the molecular chain structure moiety composed of a non-conjugated olefin unit and an aromatic vinyl unit can contribute toward a high-strength structure, therefore giving a high fracture strength (for example, elongation fatigue resistance) to the multicomponent copolymer.

As described above, it is presumed that the multicomponent copolymer having a non-conjugated polyene unit, a non-conjugated olefin unit and an aromatic vinyl unit can provide a rubber composition, a crosslinked rubber composition and a rubber product excellent in weather resistance and fracture strength.

### <Non-Conjugated Polyene Unit>

The multicomponent copolymer of the present invention contains a non-conjugated polyene unit. The non-conjugated polyene unit is a structural unit derived from a non-conjugated polyene compound as a monomer. Containing a non-conjugated polyene unit, the multicomponent copolymer is given a crosslinking characteristic.

The non-conjugated polyene compound is a compound having 2 or more polymerizable ethylenic unsaturated groups in one molecule, preferably a compound having two polymerizable ethylenic unsaturated groups in one molecule. Namely, the non-conjugated polyene unit is preferably a non-conjugated diene unit.

Examples of the non-conjugated polyene compound include cyclic non-conjugated polyene compounds such as ethylidene-norbornene (ENB, preferably 5-ethylidene-2-norbornene), dicyclopentadiene (DCPD), vinylnorbornene, (VNB, preferably 5-vinyl-2-norbornene), isopropylidene-norbornene (preferably 5-isopropylidene-norbornene), tetrahydroindene (preferably 3a,4,7,7a-tetrahydroindene), divinylbenzene (DVB), trivinylbenzene, and cyclooctadiene; and linear non-conjugated polyene compounds such as 1,4-hexadiene, 3-methyl-1,4-hexadiene, 4-methyl-1,4-hexadiene, 5-methyl-1,4-hexadiene, 4,5-dimethyl-1,4-hexadiene, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene, and 7-methyl-1,6-octadiene.

Among these, from the viewpoint of polymerizability, cyclic non-conjugated polyene compounds are preferred; ethylidene-norbornene, dicyclopentadiene, vinylnorbornene and divinylbenzene are more preferred; and dicyclopentadiene, vinylnorbornene and ethylidene-norbornene are even more preferred. Therefore, the non-conjugated polyene unit of the present invention comprises at least one selected from a group consisting of a vinylnorbornene unit and an ethylidene-norbornene unit.

One alone or two or more kinds of the above-mentioned non-conjugated polyene compounds may be used either singly or as combined. Specifically, the multicomponent copolymer of the present invention may contain one alone or two or more kinds of non-conjugated polyene units.

The non-conjugated polyene unit content is 1% by mass or more of the whole multicomponent copolymer. When the non-conjugated polyene unit content is less than 1% by mass of the whole multicomponent copolymer, sufficient crosslinking performance could not be secured and, as a result, the strength of the crosslinked rubber composition lowers.

The non-conjugated polyene unit content in the whole multicomponent copolymer is 1.0 to 20% by mass, more preferably 1.0 to 15% by mass, even more preferably 1.0 to 10% by mass, and further more preferably 1.0 to 6% by mass.

### <Non-Conjugated Olefin Unit>

The multicomponent copolymer of the present invention contains a non-conjugated olefin unit. The non-conjugated olefin unit is a structural unit derived from a non-conjugated olefin compound as a monomer. The non-conjugated olefin compound is an aliphatic unsaturated hydrocarbon compound, a non-conjugated compound having one carbon-carbon double bond and preferably has 2 to 10 carbon atoms.

Specifically, the non-conjugated olefin compound includes α-olefins such as ethylene, propylene, 1-butene, 1-pentene, 1-hexene, 1-heptene, and 1-octene; and hetero atom-substituted alkene compounds such as vinyl pivalate, 1-phenylthioethene, and N-vinylpyrrolidone.

The non-conjugated olefin compound as a monomer for the multicomponent copolymer is, from the viewpoint of more improving the weather resistance of the rubber composition, tire and the like using the multicomponent copolymer, preferably an acyclic non-conjugated olefin compound, and the acyclic non-conjugated olefin compound is preferably an α-olefin, even more preferably an α-olefin including ethylene, and is especially preferably composed of ethylene alone. In other words, the non-conjugated olefin unit in the multicomponent copolymer is preferably an acyclic non-conjugated olefin unit, and the acyclic non-conjugated olefin unit is more preferably an α-olefin unit, even more preferably an α-olefin unit containing an ethylene unit, and is especially preferably composed of an ethylene unit alone. Therefore, the non-conjugated olefin unit of the present invention is an ethylene unit alone.

One alone or two or more kinds of the above-mentioned conjugated olefin compounds may be used either singly or as combined. Specifically, the multicomponent copolymer of the present invention may contain one alone or two or more kinds of non-conjugated olefin units.

The non-conjugated olefin unit content is preferably more than 50 and 90% by mass or less of the whole multicomponent copolymer, even more preferably 60 to 85% by mass, and further more preferably 60 to 80% by mass. When the non-conjugated olefin unit content falls within the above-mentioned range, a crosslinked rubber composition excellent in weather resistance and fracture performance can be obtained.

### <Aromatic Vinyl Unit>

The multicomponent copolymer of the present invention contains an aromatic vinyl unit. The aromatic vinyl unit is a structural unit derived from an aromatic vinyl compound as a monomer. Preferably, the aromatic vinyl compound has one vinyl group directly bonding to the aromatic ring and has 8 to 10 carbon atoms. Specifically, the aromatic vinyl compound includes styrene, o-methylstyrene, m-methylstyrene, p-methylstyrene, o,p-dimethylstyrene, o-ethylstyrene, m-ethylstyrene, and p-ethylstyrene.

The aromatic vinyl compound as a monomer for the multicomponent copolymer preferably contains styrene from the viewpoint of more improving the weather resistance of the rubber composition and the tire using the multicomponent copolymer, and is more preferably composed of styrene alone. In other words, the aromatic vinyl unit in the multicomponent copolymer of the present invention preferably contains a styrene unit, and is more preferably composed of a styrene unit alone. Therefore, the aromatic vinyl unit of the present invention comprises a styrene unit.

The aromatic ring in the aromatic vinyl unit is not included in the main chain of the copolymer so far as it does not bond to the neighboring unit.

One alone or two or more kinds of the aromatic vinyl compounds may be used either singly or as combined. Specifically, the multicomponent copolymer of the present invention may contain one alone or two or more kinds of aromatic vinyl units either singly or as combined.

The aromatic vinyl unit content is 5% by mass or more and less than 30% by mass of the whole multicomponent copolymer, preferably 10 to 29% by mass, more preferably 15 to 29% by mass, even more preferably 17 to 29% by mass.

The number of the kinds of the monomers for the multicomponent copolymer of the present invention is not specifically limited so far as the multicomponent copolymer contains a non-conjugated polyene unit, a non-conjugated olefin unit and an aromatic vinyl unit. The multicomponent copolymer of the present invention may contain any other structural unit than a non-conjugated polyene unit, a non-conjugated olefin unit and an aromatic vinyl unit. The content of the other structural unit is, from the viewpoint of attaining the desired effects, preferably 30% by mass or less of the whole multicomponent copolymer, more preferably 20% by mass or less, even more preferably 10% by mass or less, further more preferably 5% by mass or less, and especially preferably, the copolymer does not contain any other structural unit, that is, the content of the other structural unit in the copolymer is especially preferably 0% by mass.

Examples of the other structural unit include a conjugated diene unit. The conjugated diene unit is a structural unit derived from a conjugated diene compound as a monomer.

Preferably, the conjugated diene compound has 4 to 8 carbon atoms. Specifically, the conjugated diene compound includes 1,3-butadiene, isoprene, 1,3-pentadiene, and 2,3-dimethyl-1,3-butadiene. Among these, 1,3-butadiene is preferred.

The multicomponent copolymer of the present invention is a multicomponent copolymer at least containing one non-conjugated polyene unit, one non-conjugated olefin unit and one aromatic vinyl unit. From the viewpoint of attaining favorable fracture performance and weather resistance, the multicomponent copolymer of the present invention is preferably a polymer produced through polymerization at least using, as monomers, one non-conjugated polyene compound, one non-conjugated olefin compound and one aromatic vinyl compound.

The multicomponent copolymer of the present invention is more preferably a tercopolymer composed of only one kind of non-conjugated polyene unit, one kind of non-conjugated olefin unit and one kind of aromatic vinyl unit, and is even more preferably a tercopolymer composed of only a non-conjugated polyene unit, an ethylene unit and a styrene unit.

A production method for the multicomponent copolymer of the present invention is described below. As described, the multicomponent copolymer of the present invention can be produced through synthesis in one reactor, that is, through one-pot synthesis, and can be produced in a simplified process.

The polystyrene-equivalent weight-average molecular weight (Mw) of the multicomponent copolymer of the present invention is preferably 5,000 to 1,000,000, more preferably 50,000 to 500,000, even more preferably 75,000 to 300,000. When Mw thereof is 5,000 or more, the multicomponent copolymer can sufficiently secure mechanical strength enough for rubber product materials, and when Mw is 1,000,000 or less, the copolymer can maintain high workability.

Further, of the multicomponent copolymer of the present invention, the molecular weight distribution (Mw/Mn) is, from the viewpoint of achieving homogeneity of the multicomponent copolymer, preferably 4 or less, more preferably 3.5 or less.

The weight-average molecular weight and the molecular weight distribution can be determined through gel permeation chromatography (GPC) using polystyrene as a standard substance.

The chain structure of the multicomponent copolymer of the present invention is not specifically limited and may be appropriately selected depending on the intended purpose, and examples thereof include a block copolymer having a structure of Aₓ-B_{y}-C_{z} (x, y and z each are an integer of 1 or more), in which A represents a non-conjugated polyene unit, B represents a non-conjugated olefin unit and C represents an aromatic vinyl unit, a random copolymer having a structure where A, B and C are aligned randomly, a taper copolymer of a mixture of the random copolymer and the block copolymer, and an alternate copolymer having a structure of (A-B-C)_{w} (w is an integer of 1 or more).

The multicomponent copolymer of the present invention may have a structure of a non-conjugated polyene unit, a non-conjugated olefin unit and an aromatic vinyl unit linearly bonding to each other (linear structure), or a structure of a non-conjugated polyene unit, a non-conjugated olefin unit and an aromatic vinyl unit bonding to each other where at least any of the units forms a branched chain (branched structure). In the case where the multicomponent copolymer of the present invention has a branched structure, the branched chain therein may also be a binary or multicomponent chain. (In other words, in the case, the branched chain may contain at least two of a non-conjugated polyene unit, a non-conjugated olefin unit and an aromatic vinyl unit.) Accordingly, among the multicomponent copolymer of the present invention, a multicomponent copolymer having a branched structure that has a binary or multicomponent branched chain can be definitely differentiated from a conventional-type graft copolymer where the stem chain and the side chain each are formed of a different one type of unit.

The melting point of the multicomponent copolymer of the present invention is preferably 100°C or lower from the viewpoint of workability. The lower limit thereof is not specifically limited but is preferably 50°C or higher from the viewpoint of fracture performance.

The glass transition temperature (Tg) of the multicomponent copolymer of the present invention is preferably 0°C or lower from the viewpoint of workability. The lower limit thereof is not specifically limited but is preferably -25°C or higher.

The crystallinity of the multicomponent copolymer of the present invention is preferably 0.5 to 50%, more preferably 5 to 40%, even more preferably 10 to 35%. When the crystallinity is 0.5% or more, cracking resistance improves further. When it is 50% or less, workability improves.

The crystallinity can be measured, for example, according to the following method.

A copolymer sample is heated from -150°C to 150°C at 10°C/min, and the endothermic peak energy (ΔH1) thereof is measured. Similarly, the crystal melting energy (ΔH0) of a 100% crystal component, polyethylene is measured.

From a ratio of the endothermic peak energy (ΔH1) of the copolymer to the crystal melting energy (ΔH0) of polyethylene (ΔH1/ΔH0), the crystallinity (%) derived from the ethylene unit (non-conjugated olefin unit) is calculated.

The endothermic peak energy of a copolymer sample and the crystal melting energy of polyethylene can be measured using a differential scanning calorimeter (DSC, "DSCQ2000" manufactured by TA Instruments Japan). For the measurement, each sample is heated from -150°C to 150°C at 10°C/min according to JIS K 7121-1987, and the endothermic peak energy at 0 to 120°C at that time (1st run) is determined.

The endothermic peak energy (ΔH1) of the multicomponent copolymer of the present invention, as measured with a differential scanning calorimeter (DSC) at 0 to 120°C, is preferably 10 to 150 J/g, more preferably 30 to 120 J/g. When the endothermic peak energy is 10 J/g or more, cracking resistance may improve further more, and when it is 150 J/g or less, workability may improve further more.

### <Production Method for Multicomponent Copolymer>

### [Polymerization Step]

Next, examples of the production method for the multicomponent copolymer of the present invention are described in detail. One example of the production method for the multicomponent copolymer of the present invention has a preamble of using, as monomers, a non-conjugated polyene compound, a non-conjugated olefin compound and an aromatic vinyl compound, and includes at least a polymerization step and optionally includes a coupling step, a washing step and any other step as needed.

As the polymerization method, any arbitrary method is employable, such as a solution polymerization method, a suspension polymerization method, a liquid-phase bulk polymerization method, an emulsion polymerization method, a vapor-phase polymerization method, or a solid-phase polymerization method. In the case where a solvent is used for polymerization reaction, the solvent may be any one that is inert in polymerization. Examples of the solvent include toluene, cyclohexane, and normal hexane.

The polymerization step may be a one-stage reaction or a two-stage or more multistage reaction. One-stage polymerization step is a step of polymerizing all the monomers to be polymerized at a time, that is, all a non-conjugated polyene compound, a non-conjugated olefin compound, an aromatic vinyl compound and any other monomer, preferably all a non-conjugated polyene compound a non-conjugated olefin compound and an aromatic vinyl compound at a time. The multistage polymerization step is a step of first reacting a part or all of one or two kinds of monomers to form a polymer (first polymerization stage), and then adding thereto a remaining kind of monomer and a remaining part of the former one or two kinds of monomers and polymerizing them in one or more stages (second polymerization stage to final polymerization stage).

In the polymerization step, preferably, the polymerization reaction is carried out in an atmosphere of an inert gas, preferably a nitrogen gas or an argon gas. The polymerization temperature for the polymerization reaction is not specifically limited, but is, for example, preferably within a range of -100°C to 200°C, and may be room temperature or so. The polymerization reaction pressure is preferably within a range of 0.1 to 10.0 MPa for the purpose of sufficiently carrying out the polymerization reaction. The polymerization reaction time is not also specifically limited, and is, for example, preferably within a range of 1 second to 10 days. The time may be appropriately selected depending on the kind of catalyst and the condition of the polymerization temperature, etc.

In the polymerization step, a polymerization terminator such as methanol, ethanol or 2-propanol may be used for terminating the polymerization.

The first polymerization catalyst composition, the second polymerization catalyst composition, the third polymerization catalyst composition and the fourth polymerization catalyst composition that may be favorably used in the polymerization step are described below.

### -First Polymerization Catalyst Composition-

The first polymerization catalyst composition is described.

The first polymerization catalyst composition includes a polymerization catalyst composition containing:
Component (A1): a rare earth element compound, or a reaction product of a rare earth element compound and a Lewis base, which does not have a bond between rare earth element and carbon,
Component (B1): at least one selected from the group consisting of an ionic compound (B1-1) of a non-coordinating anion and a cation, (B1-2) an aluminoxane, and (B1-3) at least one halogen compound among a Lewis acid, a complex compound of a metal halide and a Lewis base, and an active halogen-containing organic compound.

In the case where the first polymerization catalyst composition contains at least one selected from the group consisting of an ionic compound (B1-1) and a halogen compound (B1-3), the polymerization catalyst composition further contains:
Component (C1): an organic metal compound represented by the following formula (I):

YR¹ₐR²_{b}R³_{c} (I)

wherein Y represents a metal selected from Group 1, Group 2, Group 12 and Group 13 of the Periodic Table, R¹ and R² each represent a monovalent hydrocarbon group having 1 to 10 carbon atoms, or a hydrogen atom, R³ represents a monovalent hydrocarbon group having 1 to 10 carbon atoms, R¹, R² and R³ may be the same as or different from each other, when Y is a metal selected from Group 1 of the Periodic Table, a is 1 and b and c are 0, when Y is a metal selected from Group 2 and Group 12 of the Periodic Table, a and b are 1 and c is 0, when Y is a metal selected from Group 13 of the Periodic Table, a, b and c are 1.

The ionic compound (B 1-1) and the halogen compound (B 1-3) do not have a carbon atom to be supplied to the component (A1), and therefore the composition of the case needs the component (C1) as a carbon source to the component (A1). Even when the polymerization catalyst composition contains the aluminoxane (B 1-2), the polymerization catalyst composition may contain the component (C1). In addition, the first polymerization catalyst composition may contain any other component that may be contained in ordinary rare earth element compound-containing polymerization catalyst compositions, for example, a co-catalyst, etc.

Preferably, in a polymerization reaction system, the concentration of the component (A1) contained in the first polymerization catalyst composition is within a range of 0.1 to 0.0001 mol/l.

Further, the polymerization catalyst composition preferably contains an additive (D 1) that may be an anionic ligand.

The component (A1) to be used in the first polymerization catalyst composition is a rare earth element compound, or a reaction product of a rare earth element compound and a Lewis base. Here, the rare earth element compound and the reaction product of a rare earth element compound and a Lewis base does not have a bond between rare earth element and carbon. In the case where the rare earth element compound and the reaction product does not have a rare earth element-carbon bond, the compound is stable and is easy to handle. Here, the rare earth element compound is a compound containing a rare earth element (M), that is, a lanthanoid element composed of elements of Atomic Numbers 57 to 71 in the Periodic Table, or scandium or yttrium.

Specific examples of the lanthanoid element include lanthanum, cerium, praseodymium, neodymium, promethium, samarium, europium, gadolinium, terbium, dysprosium, holmium, erbium, thulium, ytterbium, and lutetium. One alone or two or more kinds of the components (A1) may be used either singly or as combined.

Preferably, the rare earth element compound is a salt or complex compound where the rare earth metal is divalent or trivalent, and is more preferably a rare earth element compound containing one or more ligands selected from a hydrogen atom, a halogen atom and an organic compound residue. Further, the rare earth element compound or the reaction product of a rare earth element compound and a Lewis base is preferably represented by following formula (II) or (III):

M¹¹X¹¹2·L¹¹w (II)

M¹¹X¹¹3·L¹¹w (III)

wherein M¹¹ represents a lanthanoid element, scandium or yttrium, X¹¹ each independently represents a hydrogen atom, a halogen atom, an alkoxy group, a thiolate group, an amino group, a silyl group, an aldehyde residue, a ketone residue, a carboxylic acid residue, a thiocarboxylic acid residue or a phosphorus compound residue, L¹¹ represents a Lewis base, and w represents 0 to 3.

The group (ligand) that bonds to the rare earth element of the rare earth element compound includes a hydrogen atom, a halogen atom, an alkoxy group (a group resulting from removal of hydrogen from the hydroxy group of an alcohol, and this forms a metal alkoxide), a thiolate group (a group resulting from removal of hydrogen from the thiol group of a thiol compound, and this forms a metal thiolate), an amino group (a group resulting from removal of one hydrogen atom bonding to the nitrogen atom of an ammonia, a primary amine or a secondary amine, and this forms a metal amide), a silyl group, an aldehyde residue, a ketone residue, a carboxylic acid residue, a thiocarboxylic acid residue or a phosphorus compound residue. Specifically, the group includes a hydrogen atom; an aliphatic alkoxy group such as a methoxy group, an ethoxy group, a propoxy group, a n-butoxy group, an isobutoxy group, a sec-butoxy group, a tert-butoxy group, etc.; an aromatic alkoxy group such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, a 2-isopropyl-6-neopentylphenoxy group, etc.; an aliphatic thiolate group such as a thiomethoxy group, a thioethoxy group, a thiopropoxy group, a thio-n-butoxy group, a thio-isobutoxy group, a thio-sec-butoxy group, a thio-tert-butoxy group, etc.; an arylthiolate group such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-neopentylthiophenoxy group, a 2-isopropyl-6-neopentylthiophenoxy group, a 2,4,6-triisopropylthiophenoxy group, etc.; an aliphatic amino group such as a dimethylamino group, a diethylamino group, a diisopropylamino group, etc.; an arylamino group such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, a 2,4,6-tri-tert-butylphenylamino group, etc.; a bistrialkylsilylamino group such as a bistrimethylsilylamino group, etc.; a silyl group such as a trimethylsilyl group, a tris(trimethylsilyl)silyl group, a bis(trimethylsilyl)methylsilyl group, a trimethylsilyl(dimethyl)silyl group, a triisopropylsilyl(bistrimethylsilyl)silyl group, etc.; and a halogen atom such as a fluorine atom, a chlorine atom, a bromine atom, an iodine atom, etc. Further, the group includes a residue of an aldehyde such as salicylaldehyde, 2-hydroxy-1-naphthaldehyde, 2-hydroxy-3-naphthaldehyde, etc.; a residue of a hydroxyphenone such as 2'-hydroxyacetophenone, 2'-hydroxybutyrophenone, 2'-hydroxypropiophenone, etc.; a residue of a diketone such as acetylacetone, benzoylacetone, propionylacetone, isobutylacetone, valerylacetone, ethylacetylacetone, etc.; a residue of a carboxylic acid such as isovaleric acid, caprylic acid, octanoic acid, lauric acid, myristic acid, palmitic acid, stearic acid, isostearic acid, oleic acid, linoleic acid, cyclopentanecarboxylic acid, naphthenic acid, ethylhexanoic acid, pivalic acid, Versatic acid [trade name by Shell Chemicals Japan Ltd., synthetic acid composed of a mixture of C10 monocarboxylic acid isomers], phenylacetic acid, benzoic acid, 2-naphthoic acid, maleic acid, succinic acid, etc.; a residue of a thiocarboxylic acid such as hexane thioacid, 2,2-dimethylbutane thioacid, decane thioacid, thiobenzoic acid, etc.; a residue of a phosphate ester such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauroyl phosphate, dioleyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, (2-ethylhexyl)(p-nonylphenyl) phosphate, etc.; a residue of a phosphonate ester such as monobutyl 2-ethylhexylphosphonate, mono-2-ethylhexyl 2-ethylhexylphosphonate, mono-2-ethylhexyl phenylphosphonate, mono-p-nonylphenyl 2-ethylhexylphosphonate, mono-2-ethylhexyl phosphonate, mono-1-methylheptyl phosphonate, mono-p-nonylphenyl phosphonate, etc.; and a residue of a phosphinic acid such as dibutylphosphinic acid, bis(2-ethylhexyl)phosphinic acid, bis(1-methylheptyl)phosphinic acid, dilaurylphosphinic acid, dioleylphosphnic acid, diphenylphosphinic acid, bis(p-nonylphenyl)phosphinic acid, butyl(2-ethylhexyl)phosphinic acid, (2-ethylhexyl)(1-methylheptyl)phosphinic acid, (2-ethylhexyl)(p-nonylphenyl)phosphinic acid, butylphosphinic acid, 2-ethylhexylphosphinic acid, 1-methylheptylphoshinic acid, oleylphosphinic acid, laurylphosphinic acid, phenylphosphinic acid, p-nonylphenylphosphinic acid, etc. One alone or two or more kinds of these ligands may be used either singly or as combined.

In the component (A1) to be used in the first polymerization catalyst composition, examples of the Lewis base to react with the above-mentioned rare earth element compound include tetrahydrofuran, diethyl ether, dimethylaniline, trimethyl phosphine, lithium chloride, neutral olefins, neutral diolefins, etc. Here, in the case where the rare earth element compound reacts with plural Lewis bases (where w is 2 or 3 in the formula (II) and the formula (III)), the Lewis bases L¹¹'s may be the same or different.

Favorably, the rare earth element compound preferably contains a compound represented by the following formula (IV):

M-(NQ¹)(NQ²)(NQ³) (IV)

wherein M is at least one selected from a lanthanoid element, scandium and yttrium, NQ¹, NQ² and NQ³ each represent an amino group, and these may be the same or different, and have an M-N bond.

Specifically, the compound represented by the formula (IV) is characterized by having three M-N bonds. Having three M-N bonds, the compound has advantages in that the structure thereof is stable since each bond therein is chemically equivalent to each other, and therefore the compound is easy to handle.

In the above formula (IV), the amino group represented by NQ (NQ¹, NQ² and NQ³) may be any of an aliphatic amino group such as a dimethylamino group, a diethylamino group, a diisopropylamino group, etc.; an arylamino group such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, a 2,4,6-tri-tert-butylphenylamino group, etc.; and a bistrialkylsilylamino group such as a bistrimethylsilylamino group, etc., but is preferably a bistrimethylsilylamino group.

The component (B1) to be used in the first polymerization catalyst composition is at least one selected from the group consisting of an ionic compound (B1-1), an aluminoxane (B1-2) and a halogen compound (B1-3). The total content of the component (B1) in the first polymerization catalyst composition is preferably 0.1 to 50 times by mol the component (A1).

The ionic compound (B1-1) includes an ionic compound that is composed of a non-coordinating anion and a cation and reacts with a rare earth element compound or a reaction product thereof and a Lewis base of the component (A1) to form a cationic transition metal compound. Here, examples of the non-coordinating anion include tetraphenyl borate, tetrakis(monofluorophenyl) borate, tetrakis(difluorophenyl) borate, tetrakis(trifluorophenyl) borate, tetrakis(tetrafluorophenyl) borate, tetrakis(pentafluorophenyl) borate, tetrakis(tetrafluoromethylphenyl) borate, tetra(tolyl) borate, tetra(xylyl) borate, (triphenyl,pentafluorophenyl) borate, [tri(pentafluorophenyl), phenyl] borate, tridecahydride-7,8-dicarbaundecaborate, etc. On the other hand, the cation includes a carbonium cation, an oxonium cation, an ammonium cation, a phosphonium cation, a cycloheptatrienyl cation, a transition metal-having ferrocenium cation, etc. Specific examples of the carbonium cation include a tri-substituted carbonium cation such as a triphenylcarbonium cation, a tri(substituted phenyl)carbonium cation, etc. More specifically, the tri(substituted phenyl)carbonium cation includes a tri(methylphenyl)carbonium cation, a tri(dimethylphenyl)carbonium cation, etc. Specific examples of the ammonium cation include a trialkylammonium cation such as a trimethylammonium cation, a triethylammonium cation, a tripropylammonium cation, a tributylammonium cation (for example, a tri(n-butyl)ammonium cation), etc.; an N,N-dialkylanilinium cation such as an N,N-dimethylanilinium cation, an N,N-diethylanilinium cation, an N,N,2,4,6-pentamethylanilinium cation, etc.; and a dialkylammonium cation such as a diisopropylammonium cation, a dicyclohexylammonium cation, etc. Specific examples of the phosphonium cation include a triarylphosphonium cation such as a triphenylphosphonium cation, a tri(methylphenyl)phosphonium cation, a tri(dimethylphenyl)phosphonium cation, etc. Accordingly, as the ionic compound, a compound constructed by selecting the above-mentioned non-coordinating anion and the cation and combining them is preferred. Specifically, N,N-dimethylanilinium tetrakis(pentafluorophenyl)borate, triphenylcarbonium tetrakis(pentafluorophenyl)borate and the like are preferred. One alone or two or more kinds of these ionic compounds may be used either singly or as combined. The content of the ionic compound (B1-1) in the first polymerization catalyst composition is preferably 0.1 to 10 times by mol the component (A1), more preferably about 1 time by mol.

The above-mentioned aluminoxane (B1-2) is a compound obtained by bringing an organic aluminum compound into contact with a condensing agent, and examples thereof include a chain aluminoxane or a cyclic aluminoxane having a repeating unit represented by a formula: (-Al(R')O-) wherein R' represents a monovalent hydrocarbon group having 1 to 10 carbon atoms, a part of the hydrocarbon groups may be substituted with at least one selected from the group consisting of a halogen atom and an alkoxy group, and the degree of polymerization of the repeating unit is preferably 5 or more, more preferably 10 or more. Here, specific examples of R' include a methyl group, an ethyl group, a propyl group, an isobutyl group, etc., and among these, a methyl group is preferred. Examples of the organic aluminum compound to be used as the raw material for the aluminoxane include a trialkylaluminum such as trimethylaluminum, triethylaluminum, tributylaluminum, triisobutylaluminum, etc., and a mixture thereof. Trimethylaluminum is especially preferred. For example, an aluminoxane using a mixture of trimethylaluminum and tributylaluminum as the raw materials is preferably used. The content of the aluminoxane (B1-2) in the first polymerization catalyst composition is preferably such that the elemental ratio of the aluminum element Al of the aluminoxane to the rare earth element M that constitutes the component (A1), Al/M could be 10 to 1,000 or so.

The halogen compound (B1-3) is at least one of a Lewis acid, a complex compound of a metal halide and a Lewis base, and an active halogen-containing organic compound, and, for example, the compound can react with a rare earth element compound or a reaction product thereof with a Lewis base, which is the component (A1), thereby generating an cationic transition metal compound, a halogenated transition metal compound, or a compound in which the transition metal center is short in charge. The total content of the halogen compound (B 1-3) in the first polymerization catalyst composition is preferably 1 to 5 times by mol the component (A1).

As the Lewis acid, a boron-containing halogen compound such as B(C₆F₅)₃ or the like, or an aluminum-containing halogen compound such as Al(C₆F₅)₃ or the like is usable, and in addition, a halogen compound containing an element belonging to Group 3, Group 4, Group 5, Group 6 or Group 8 of the Periodic Table is also usable. An aluminum halide or an organic metal halide is preferably used. The halogen element is preferably chlorine or bromine. Specifically, the Lewis acid includes methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, titanium tetrachloride, tungsten hexachloride, etc. Among these, diethylaluminum chloride, ethylaluminum sesquichloride, ethylaluminum dichloride, diethylaluminum bromide, ethylaluminum sesquibromide and ethylaluminum dibromide are especially preferred.

The metal halide that constitutes the complex compound of a metal halide and a Lewis base includes beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, gold bromide, etc. Among these, magnesium chloride, calcium chloride, barium chloride, manganese chloride, zinc chloride, and copper chloride are preferred, and magnesium chloride, manganese chloride, zinc chloride and copper chloride are especially preferred.

As the Lewis base to constitute the complex compound of the metal halide and a Lewis base, a phosphorus compound, a carbonyl compound, a nitrogen compound, an ether compound, an alcohol and the like are preferred. Specifically, the Lewis base includes tributyl phosphate, tri-2-ethylhexyl phosphate, triphenyl phosphate, tricresyl phosphate, triethyl phosphine, tributyl phosphine, triphenyl phosphine, diethylphosphinoethane, diphenylphosphinoethane, acetylacetone, benzoylacetone, propionylacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, napthenic acid, Versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, lauryl alcohol, etc. Among these, tri-2-ethylhexyl phosphate, tricresyl phosphate, acetylacetone, 2-ethylhexanoic acid, Versatic acid, 2-ethylhexyl alcohol, 1-decanol, and lauryl alcohol are preferred.

The Lewis base is reacted in a ratio of preferably 0.01 to 30 mol, more preferably 0.5 to 10 mol relative to 1 mol of the metal halide. Using the reaction product of the Lewis base reduces the metal to remain in the polymer.

The active halogen-containing organic compound includes benzyl chloride, etc.

The component (C1) for use in the first polymerization catalyst composition is an organic metal compound represented by the following formula (I):

YR¹ₐR²_{b}R³_{c} (I)

wherein Y represents a metal selected from Group 1, Group 2, Group 12 and Group 13 of the Periodic Table, R¹ and R² each represent a monovalent hydrocarbon group having 1 to 10 carbon atoms, or a hydrogen atom, R³ represents a monovalent hydrocarbon group having 1 to 10 carbon atoms, R¹, R² and R³ may be the same as or different from each other, when Y is a metal selected from Group 1 of the Periodic Table, a is 1 and b and c are 0, when Y is a metal selected from Group 2 and Group 12 of the Periodic Table, a and b are 1 and c is 0, when Y is a metal selected from Group 13 of the Periodic Table, a, b and c are 1, and is preferably an organic aluminum compound represented by the following formula (V):

AlR¹R²R³ (V)

wherein R¹ and R² each represent a monovalent hydrocarbon group having 1 to 10 carbon atoms, or a hydrogen atom, R³ represents a monovalent hydrocarbon group having 1 to 10 carbon atoms, and R¹, R² and R³ may be the same as or different from each other.

The organic aluminum compound represented by the formula (V) includes trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride; ethylaluminum dihydride, n-propylaluminum dihydride, isobutylaluminum dihydride, etc. Among these, triethylaluminum, triisobutylaluminum, diethylaluminum hydride, and diisobutylaluminum hydride are preferred. One alone or two or more kinds of the organic aluminum compounds as the component (C1) mentioned above may be used either singly or as combined. The content of the organic aluminum compound in the first polymerization catalyst composition is preferably 1 to 50 times by mol the component (A1), more preferably about 10 times by mol.

Adding the additive (D1) to be an anionic ligand is preferred as exhibiting an effect of producing a multicomponent copolymer having a higher cis-1,4-bond content with high yield.

The additive (D1) is not specifically limited so far as it is exchangeable with the amino group of the component (A1), but is preferably one having any of an OH group, an NH group and an SH group.

Specific examples of the compound having an OH group include an aliphatic alcohol, an aromatic alcohol, etc. Specifically, the compound includes, though not limited thereto, 2-ethyl-1-hexanol, dibutylhydroxytoluene, alkylated phenol, 4,4'-thiobis(6-t-butyl-3-methylphenol), 4,4'-butylidenebis(6-t-butyl-3-methylphenol), 2,2'-methylenebis(4-methyl-6-t-butylphenol), 2,2'-methylenebis(4-ethyl-6-t-butylphenol), 2,6-di-t-butyl-4-ethylphenol, 1,1,3-tris(2-methyl-4-hydroxy-5-t-butylphenyl)butane, n-octadecyl-3-(4-hydroxy-3,5-di-t-butylphenyl)propionate, tetrakis[methylene-3-(3,5-di-t-butyl-4-hydroxyphenyl)propionate]methane, dilaurylthio dipropionate, distearylthio dipropionate, dimyristylthio dipropionate, etc. Examples of hindered phenol-type compounds include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis(n-octylthio)-6-(4-hydroxy-3,5-di-t-butylanilino)-1,3,5-triazine, pentaerythryl-tetrakis[3-(3,5-di-t-butyl-4-hydroxyphenyl)propionate], 2,2-thio-diethylenebis[3-(3,5-di-t-butyl-4-hydroxyphenyl)propionate], octadecyl-3-(3,5-di-t-butyl-4-hydroxyphenyl)propionate, N,N'-hexamethylenebis(3,5-di-t-butyl-4-hydroxyhydrocinnamamide), 3,5-di-t-butyl-4-hydroxydibenzyl phosphonate diethyl ester, 1,3,5-trimethyl-2,4,6-tris(3,5-di-t-butyl-4-hydroxybenzyl)benzene, tris(3,5-di-t-butyl-4-hydroxybenzyl)-isocyanurate, octylated diphenylamine, 2,4-bis[(octylthio)methyl]-o-cresol, etc. Hydrazine-type compounds include N,N'-bis[3-(3,5-di-t-butyl-4-hydroxyphenyl)propionyl]hydrazine.

The compound having an NH group includes a primary amine such as an alkylamine, an arylamine, etc., and a secondary amine. Specifically, the compound includes dimethylamine, diethylamine, pyrrole, ethanolamine, diethanolamine, dicyclohexylamine, N,N'-dibenzylethylenediamine, bis(2-diphenylphosphinophenyl)amine, etc.

The compound having an SH group includes an aliphatic thiol, an aromatic thiol, etc., and in addition, compounds represented by the following formulae (VI) and (VII): 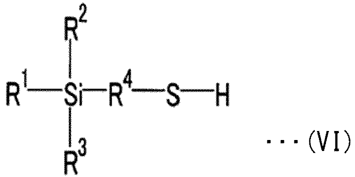 wherein R¹, R² and R³ each are independently represented by -O-CⱼH₂ⱼ₊₁, -(O-CₖH₂ₖ-)ₐ-O-CₘH₂ₘ₊₁ or -CₙH₂ₙ₊₁, j, m and n each independently represent an integer of 0 to 12, k and a each independently represent an integer of 1 to 12, and R⁴ represents a linear, branched or cyclic, and saturated or unsaturated, alkylene, cycloalkylene, cycloalkylalkylene, cycloalkenylalkylene, alkenylene, cycloalkenylene, cycloalkylalkenylene, cycloalkenylalkenylene, arylene or aralkylene group each having 1 to 12 carbon atoms.

Specific examples of the compound represented by the formula (VI) include 3-mercaptopropyltrimethoxysilane, 3-mercaptopropyltriethoxysilane, 3-mercaptopropylmethyldimethoxysilane, (mercaptomethyl)dimethylethoxysilane, mercaptomethyltrimethoxysilane, etc. 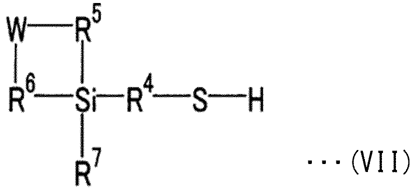 wherein W represents -NR⁸-, -O- or -CR⁹R¹⁰- (where R⁸ and R⁹ each represent - CₚH₂ₚ₊₁, R¹⁰ represents -C_{q}H_{2q+1}, and p and q each independently represent an integer of 0 to 20), R⁵ and R⁶ each independently represent -M-CᵣH₂ᵣ- (where M represents -O- or -CH₂-, r represents an integer of 1 to 20), R⁷ represents -O-CⱼH₂ⱼ₊₁, ⁻(O-CₖH₂ₖ-)ₐ-O-CₘH₂ₘ₊₁ or -CₙH₂ₙ₊₁, j, m and n each independently represent an integer of 0 to 12, k and a each independently represent an integer of 1 to 12, and R⁴ represents a linear, branched or cyclic, and saturated or unsaturated, alkylene, cycloalkylene, cycloalkylalkylene, cycloalkenylalkylene, alkenylene, cycloalkenylene, cycloalkylalkenylene, cycloalkenylalkenylene, arylene or aralkylene group each having 1 to 12 carbon atoms.

Specific examples of the compound represented by the formula (VII) include 3-mercaptopropyl(ethoxy)-1,3-dioxa-6-methylaza-2-silacyclooctane, 3-mercaptopropyl(ethoxy)-1,3-dioxa-6-butylaza-2-silacyclooctane, 3-mercaptopropyl(ethoxy)-1,3-dioxa-6-dodecylaza-2-silacyclooctane, etc.

As the additive (D1), an anionic terdentate ligand precursor represented by the following formula (VIII) is preferably used:

E¹-T¹-X-T²-E² (VIII)

wherein X represents an anionic electron donating group containing a ligand atom selected from atoms of Group 15 of the Periodic Table, E¹ and E² each independently represent a neutral electron donating group containing a ligand atom selected from atoms of Group 15 and Group 16 of the Periodic Table, and T¹ and T² represent a crosslinking group that crosslinks X and E¹ and a crosslinking group that crosslinks X and E², respectively.

The additive (D1) is added preferably in an amount of 0.01 to 10 mol relative to 1 mol of the rare earth element compound, more preferably in an amount of 0.1 to 1.2 mol. When the added amount is 0.1 mol or more, the monomer polymerization runs on to attain the intended object of the present invention. The amount to be added is preferably equivalent (1.0 mol) to the rare earth element compound, but an excessive amount of the additive may be added. The amount to be added is preferably 1.2 mol or less, as reducing reagent loss.

In the above formula (VIII), the electron donating group for E¹ and E² is a group containing a ligand atom selected from atoms of Group 15 and Group 16 of the Periodic Table. E¹ and E² may be the same group, or may be different groups. Examples of the ligand atom include nitrogen N, phosphorus P, oxygen O, sulfur S, etc., and P is preferred.

In the case where the ligand atom contained in E¹ and E² is P, examples of the neutral electron donating group for E¹ and E² include a diarylphosphino group such as a diphenylphosphino group, a ditolylphosphino group, etc.; a dialkylphosphino group such as a dimethylphosphino group, a diethylphosphino group, etc.; and an alkylarylphosphino group such as a methylphenylphosphino group, etc. A diarylphosphino group is preferred.

In the case where the ligand atom contained in E¹ and E² is N, examples of the neutral electron donating group for E¹ and E² include a dialkylamino group and a bis(trialkylsilyl)amino group such as a dimethylamino group, a diethylamino group, a bis(trimethylsilyl)amino group, etc.; a diarylamino group such as a diphenylamino group, etc.; and an alkylarylamino group such as a methylphenylamino group, etc.

In the case where the ligand atom contained in E¹ and E² is O, examples of the neutral electron donating group for E¹ and E² include an alkoxy group such as a methoxy group, an ethoxy group, a propoxy group, a butoxy group, etc.; and an aryloxy group such as a phenoxy group, a 2,6-dimethylphenoxy group, etc.

In the case where the ligand atom contained in E¹ and E² is S, examples of the neutral electron donating group for E¹ and E² include an alkylthio group such as a methylthio group, an ethylthio group, a propylthio group, a butylthio group, etc.; and an arylthio group such as a phenylthio group, a tolylthio group, etc.

The anionic electron donating group X is a group containing a ligand atom selected from Group 15 of the Periodic Table. The ligand atom is preferably phosphorus P or nitrogen N, more preferably N.

The crosslinking groups T¹ and T² may be groups capable of crosslinking X, and E¹ or E², respectively, and examples thereof include an arylene group optionally having a substituent on the aryl ring thereof. T¹ and T² may be the same groups or different groups.

Examples of the arylene group include a phenylene group, a naphthylene group, a pyridylene group, a thienylene group, and are preferably a phenylene group and a naphthylene group. Any arbitrary substituent may be on the aryl ring of the arylene group. Examples of the substituent include an alkyl group such as a methyl group, an ethyl group, etc.; an aryl group such as a phenyl group, a tolyl group, etc.; a halogen group such as fluorine, chlorine, bromine, etc.; and a silyl group such as a trimethylsilyl group, etc.

More preferred examples of the arylene group include a 1,2-phenylene group.

### -Second Polymerization Catalyst Composition-

Next, the second polymerization catalyst composition is described. The second polymerization catalyst composition includes a polymerization catalyst composition containing at least one complex selected from the group consisting of a metallocene complex represented by the following formula (IX): 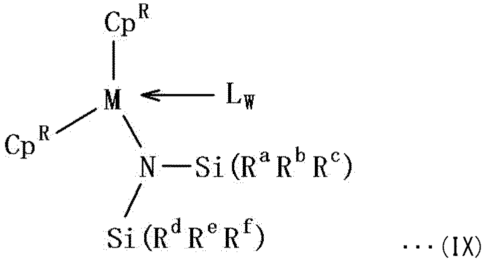 wherein M represents a lanthanoid element, scandium or yttrium, Cp^{R} each independently represents a substituted or unsubstituted indenyl group, R^{a} to R^{f} each independently represent an alkyl group having 1 to 3 carbon atoms, or a hydrogen atom, L represents a neutral Lewis base, w represents an integer of 0 to 3, and a metallocene complex represented by the following formula (X): 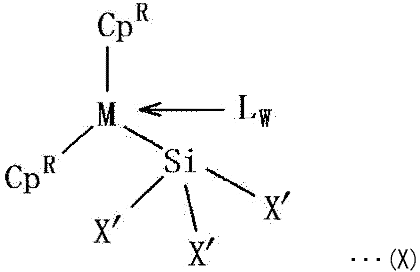 wherein M represents a lanthanoid element, scandium or yttrium, Cp^{R} each independently represents a substituted or unsubstituted indenyl group, X' represents a hydrogen atom, a halogen atom, an alkoxy group, a thiolate group, an amino group, a silyl group, or a monovalent hydrocarbon group having 1 to 20 carbon atoms, L represents a neutral Lewis base, w represents an integer of 0 to 3), and a half-metallocene cation complex represented by the following formula (XI): 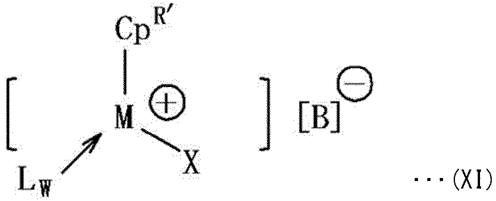 wherein M represents a lanthanoid element, scandium or yttrium, Cp^{R'} represents a substituted or unsubstituted cyclopentadienyl, indenyl or fluorenyl group, X represents a hydrogen atom, a halogen atom, an alkoxy group, a thiolate group, an amino group, a silyl group, or a monovalent hydrocarbon group having 1 to 20 carbon atoms, L represents a neutral Lewis base, w represents an integer of 0 to 3, [B]⁻ represents a non-coordinating anion.

The second polymerization catalyst composition may further contain any other component that may be contained in ordinary metallocene complex-containing polymerization catalyst compositions, for example, a co-catalyst, etc. Here, the metallocene complex is a complex compound having one or more cyclopentadienyl groups or derivatives thereof bonding to the center atom therein, and in particular, a metallocene complex having one cyclopentadienyl group or a derivative thereof bonding to the center atom therein may be referred to as a half-metallocene complex.

In the polymerization reaction system, the concentration of the complex contained in the second polymerization catalyst composition is preferably within a range of 0.1 to 0.0001 mol/L.

In the metallocene complexes represented by the above formulae (IX) and (X), Cp^{R} in the formulae is an unsubstituted indenyl group or a substituted indenyl group. Cp^{R} that has an indenyl ring as the basic skeleton may be represented by C₉H₇₋ₓRₓ or C₉H₁₁₋ₓRₓ. Here, x is an integer of 0 to 7 or 0 to 11. Preferably, R each independently represents a hydrocarbyl group or a metalloid group. The carbon number of the hydrocarbyl group is preferably 1 to 20, more preferably 1 to 10, even more preferably 1 to 8. Specifically, preferred examples of the hydrocarbyl group include a methyl group, an ethyl group, a phenyl group, a benzyl group, etc. On the other hand, examples of metalloid of the metalloid group include germyl Ge, stannyl Sn, and silyl Si. Preferably, the metalloid group has a hydrocarbyl group, and the hydrocarbyl group that the metalloid group has is the same as the above-mentioned hydrocarbyl group. Specifically, the metalloid group includes a trimethylsilyl group, etc. Specifically, the substituted indenyl group include 2-phenylindenyl, 2-methylindenyl, etc. Two Cp^{R}'s in the formulae (IX) and (X) may be the same as or different from each other.

In the half-metallocene cation complex represented by the above formula (XI), Cp^{R'} in the formula is an unsubstituted or substituted cyclopentadienyl, indenyl or fluorenyl group, and among these, an unsubstituted or substituted indenyl group is preferred. Cp^{R'} having a cyclopentadienyl ring as the basic skeleton is represented by C₅H₅₋ₓRₓ. x is an integer of 0 to 5. Preferably, R each independently represents a hydrocarbyl group or a metalloid group. The carbon number of the hydrocarbyl group is preferably 1 to 20, more preferably 1 to 10, even more preferably 1 to 8. Specifically, preferred examples of the hydrocarbyl group include a methyl group, an ethyl group, a phenyl group, a benzyl group, etc. On the other hand, examples of metalloid of the metalloid group include germyl Ge, stannyl Sn, and silyl Si. Preferably, the metalloid group has a hydrocarbyl group, and the hydrocarbyl group that the metalloid group has is the same as the above-mentioned hydrocarbyl group. Specifically, the metalloid group includes a trimethylsilyl group, etc. Specific examples of Cp^{R}' that has a cyclopentadienyl ring as the basic skeleton include the following: 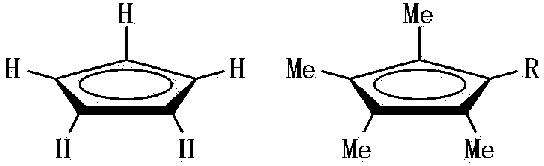 wherein R represents a hydrogen atom, a methyl group or an ethyl group.

In the formula (XI), Cp^{R}' that has the above-mentioned indenyl ring as the basic skeleton is defined in the same manner as that for Cp^{R} in the formula (IX), and preferred examples thereof are also the same as those of the latter.

In the formula (XI), Cp^{R}' that has the above-mentioned fluorenyl ring as the basic skeleton may be represented by C₁₃H₉₋ₓRₓ or C₁₃H₁₇₋ₓRₓ. Here, x represents an integer of 0 to 9, or 0 to 17. Preferably, R each independently represent a hydrocarbyl group or a metalloid group. The carbon number of the hydrocarbyl group is preferably 1 to 20, more preferably 1 to 10, even more preferably 1 to 8. Specifically, preferred examples of the hydrocarbyl group include a methyl group, an ethyl group, a phenyl group, a benzyl group, etc. On the other hand, examples of metalloid of the metalloid group include germyl Ge, stannyl Sn, and silyl Si. Preferably, the metalloid group has a hydrocarbyl group, and the hydrocarbyl group that the metalloid group has is the same as the above-mentioned hydrocarbyl group. Specifically, the metalloid group includes a trimethylsilyl group, etc.

The center metal M in the formulae (IX), (X) and (XI) is a lanthanoid element, scandium or yttrium. The lanthanoid element includes fifteen elements of Atomic Numbers 57 to 71, and any of these may be for the metal. Preferred examples of the center metal M include samarium Sm, neodymium Nd, praseodymium Pr, gadolinium Gd, cerium Ce, holmium Ho, scandium Sc and yttrium Y

The metallocene complex represented by the formula (IX) includes a silylamide ligand [-N(SiR₃)₂]. The group R (R^{a} to R^{f} in the formula (IX)) contained in the silylamide ligand each independently represent an alkyl group having 1 to 3 carbon atoms, or a hydrogen atom. Preferably, at least one of R^{a} to R^{f} is a hydrogen atom. When at least one of R^{a} to R^{f} is a hydrogen atom, catalyst synthesis is easy, and in addition, since the bulkiness around silicon is low, a non-conjugated olefin compound and an aromatic vinyl compound could be readily introduced into the complex. From the same viewpoint, more preferably, at least one of R^{a} to R^{c} is a hydrogen atom and at least one of R^{d} to R^{f} is a hydrogen atom. Further, the alkyl group is preferably a methyl group.

The metallocene complex represented by the formula (X) contains a silyl ligand [-SiX'₃]. X' contained in the silyl ligand [-SiX'₃] is a group defined in the same manner as that for X in the formula (XI), and preferred examples thereof are also the same as those of the latter.

In the formula (XI), X is a group selected from a hydrogen atom, a halogen atom, an alkoxy group, a thiolate group, an amino group, a silyl group and a monovalent hydrocarbon group having 1 to 20 carbon atoms. Here, the alkoxy group includes an aliphatic alkoxy group such as a methoxy group, an ethoxy group, a propoxy group, a n-butoxy group, an isobutoxy group, a sec-butoxy group, a tert-butoxy group, etc.; and an aryloxy group such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, a 2-isopropyl-6-neopentylphenoxy group, etc. Among these, a 2,6-di-tert-butylphenoxy group is preferred.

In the formula (XI), the thiolate group represented by X includes an aliphatic thiolate group such as a thiomethoxy group, a thioethoxy group, a thiopropoxy group, a thio-n-butoxy group, a thio-isobutoxy group, a thio-sec-butoxy group, a thio-tert-butoxy group, etc.; and an arylthiolate group such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-neopentylthiophenoxy group, a 2-isopropyl-6-neopentylthiophenoxy group, a 2,4,6-triisopropylthiophenoxy group, etc. Among these, a 2,4,6-triisopropylthiophenoxy group is preferred.

In the formula (XI), the amino group represented by X includes an aliphatic amino group such as a dimethylamino group, a diethylamino group, a diisopropylamino group, etc.; an arylamino group such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, a 2,4,6-tri-tert-butylphenylamino group, etc.; and a bistrialkylsilylamino group such as a bistrimethylsilylamino group, etc. Among these, a bistrimethylsilylamino group is preferred.

In the formula (XI), the silyl group represented by X includes a trimethylsilyl group, a tris(trimethylsilyl)silyl group, a bis(trimethylsilyl)methylsilyl group, a trimethylsilyl(dimethyl)silyl group, a triisopropylsilyl(bistrimethylsilyl)silyl group, etc. Among these, a tris(trimethylsilyl)silyl group is preferred.

In the formula (XI), the halogen atom represented by X may be any of a fluorine atom, a chlorine atom, a bromine atom or an iodine atom, but is preferably a chlorine atom or a bromine atom. Specifically, the monovalent hydrocarbon group having 1 to 20 carbon atoms that X represents includes a linear or branched aliphatic hydrocarbon group such as a methyl group, an ethyl group, an n-propyl group, an isopropyl group, an n-butyl group, an isobutyl group, a sec-butyl group, a tert-butyl group, a neopentyl group, a hexyl group, an octyl group, etc.; an aromatic hydrocarbon group such as a phenyl group, a tolyl group, a naphthyl group, etc.; an aralkyl group such as a benzyl group, etc.; and also a silicon atom-containing hydrocarbon group such as a trimethylsilylmethyl group, a bistrimethylsilylmethyl group, etc. Among these, a methyl group, an ethyl group, an isobutyl group and a trimethylsilylmethyl group are preferred.

In the formula (XI), X is preferably a bistrimethylsilylamino group, or a monovalent hydrocarbon group having 1 to 20 carbon atoms.

In the formula (XI), examples of the non-coordinating anion represented by [B]⁻ include a tetravalent boron anion. Specifically, the tetravalent boron anion includes a tetraphenylborate, a tetrakis(monofluorophenyl)borate, a tetrakis(difluorophenyl)borate, a tetrakis(trifluorophenyl)borate, a tetrakis(tetrafluorophenyl)borate, a tetrakis(pentafluorophenyl)borate, a tetrakis(tetrafluoromethylphenyl)borate, a tetra(tolyl)borate, a tetra(xylyl)borate, a (triphenyl,pentafluorophenyl)borate, a [tris(pentafluorophenyl),phenyl]borate, a tridecahydride-7,8-dicarbaundecaborate, etc. Among these, a tetrakis(pentafluorophenyl)borate is preferred.

The metallocene complex represented by the above formulae (IX) and (X) and the half-metallocene complex represented by the above formula (XI) further contain 0 to 3, preferably 0 to 1 neutral Lewis base L. Here, example of the neutral Lewis base L include tetrahydrofuran, diethyl ether, dimethylaniline, trimethyl phosphine, lithium chloride, neutral olefins, neutral diolefins, etc. Here, in the case where the complex contains plural neutral Lewis bases L's, the neutral Lewis bases L's may be the same or different.

The metallocene complex represented by the above formulae (IX) and (X) and the half-metallocene complex represented by the above formula (XI) may exist as a monomer, or may also exist as a dimer or a more multimeric polymer.

The metallocene complex represented by the formula (IX) can be obtained, for example, by reacting a lanthanoid trishalide, a scandium trishalide or a yttrium trishalide with an indenyl salt (for example, potassium salt or lithium salt) and a bis(trialkylsilyl)amine salt (for example, potassium salt or lithium salt) in a solvent. The reaction temperature may be room temperature or so, and therefore the complex can be produced under a mild condition. Not defined, the reaction time may be a few hours to tens of hours or so. The reaction solvent is not specifically limited, but is preferably a solvent that dissolves raw materials and products, and for example, toluene may be used. A reaction example for producing the metallocene complex represented by the formula (IX) is shown below: 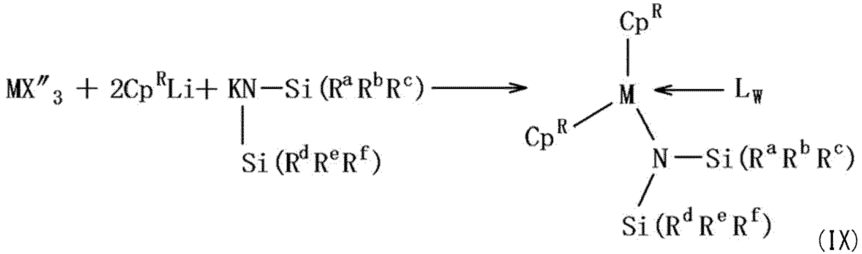 wherein X" represents a halide.

The metallocene complex represented by the formula (X) may be obtained, for example, by reacting a lanthanoid trishalide, a scandium trishalide or a yttrium trishalide with an indenyl salt (for example, potassium salt or lithium salt) and a silyl salt (for example, potassium salt or lithium salt) in a solvent. The reaction temperature may be room temperature or so, and therefore the complex can be produced under a mild condition. Not defined, the reaction time may be a few hours to tens of hours or so. The reaction solvent is not specifically limited, but is preferably a solvent that dissolves raw materials and products, and for example, toluene may be used. A reaction example for producing a metallocene complex represented by the formula (X) is shown below: 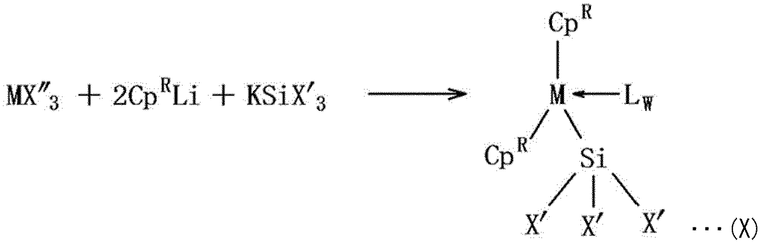 wherein X" represents a halide.

The half-metallocene cation complex represented by the formula (XI) may be obtained, for example, according to the following reaction.

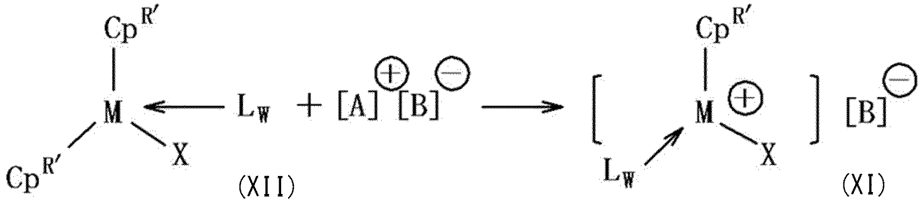

Here, in the compound represented by the formula (XII), M represents a lanthanoid element, scandium or yttrium, Cp^{R'} each independently represents an unsubstituted or substituted cyclopentadienyl, indenyl or fluorenyl group, X represents a hydrogen atom, a halogen atom, an alkoxy group, a thiolate group, an amino group, a silyl group, or a monovalent hydrocarbon group having 1 to 20 carbon atoms, L represents a neutral Lewis base, w represents an integer of 0 to 3. In the ionic compound represented by the formula [A]⁺[B]⁻, [A]⁺ represents a cation, [B]⁻ represents a non-coordinating anion.

Examples of the cation represented by [A]⁺ include a carbonium cation, an oxonium cation, an amine cation, a phosphonium cation, a cycloheptatrienyl cation, a transition metal-having ferrocenium cation, etc. The carbonium cation includes a tri-substituted carbonium cation such as a triphenylcarbonium cation, a tri(substituted phenyl)carbonium cation, etc. Specifically, the tri(substituted phenyl)carbonyl cation includes a tri(methylphenyl)carbonium cation, etc. The amine cation includes a trialkylammonium cation such as a trimethylammonium cation, a triethylammonium cation, a tripropylammonium cation, a tributylammonium cation, etc.; an N,N-dialkylanilinium cation such as an N,N-dimethylanilinium cation, an N,N-diethylanilinium cation, an N,N,2,4,6-pentamethylanilinium cation, etc.; and a dialkylammonium cation such as a diisopropylammonium cation, a dicyclohexylammonium cation, etc. The phosphonium cation includes a triarylphosphonium cation such as a triphenylphosphonium cation, a tri(methylphenyl)phosphonium cation, a tri(dimethylphenyl)phosphonium cation, etc. Among these cations, an N,N-dialkylanilinium cation and a carbonium cation are preferred, and an N,N-dialkylanilinium cation is especially preferred.

The ionic compound represented by the formula [A]⁺[B]⁻, which is used in the above-mentioned reaction, is a compound constructed by selectively combining the above-mentioned non-coordinating anion and cation, and N,N-dimethylanilinium tetrakis(pentafluorophenyl)borate, and triphenylcarbonium tetrakis(pentafluorophenyl)borate and the like are preferred. Preferably, the ionic compound is added in an amount of 0.1 to 10 times by mol, more preferably about 1 time by mol the metallocene complex. In the case where the half-metallocene cation complex represented by the formula (XI) is used in the polymerization reaction, the half-metallocene cation complex may be put into the polymerization reaction system as it is, or the compound represented by the formula (XII) to be used in the reaction and the ionic compound represented by the formula [A]⁺[B]⁻ may be separately put into the polymerization reaction system to form the half-metallocene cation complex represented by the formula (XI) in the reaction system. Alternatively, the metallocene complex represented by the formula (IX) or (X) and the ionic compound represented by [A]⁺[B]⁻ may be used as combined so as to form the half-metallocene cation complex represented by the formula (XI) in the reaction system.

Preferably, the structure of the metallocene complex represented by the formulae (IX) and (X) and the half-metallocene cation complex represented by the formula (XI) is determined through X-ray structural analysis.

The co-catalyst usable in the second polymerization catalyst composition may be arbitrarily selected from components that are usable as a co-catalyst for ordinary metallocene complex-containing polymerization catalyst compositions. Preferred examples of the co-catalyst include aluminoxanes, organic aluminium compounds, the above-mentioned ionic compounds, etc. One alone or two or more kinds of these co-catalyst may be used either singly or as combined.

The aluminoxane is preferably an alkylaluminoxane, and examples thereof include methylaluminoxane (MAO), modified methylaluminoxane, etc. As the modified methylaluminoxane, MMAO-3A (manufactured by Tosoh Finechem Corporation) and the like are preferred. The content of the aluminoxane in the second polymerization catalyst composition is preferably such that the elemental ratio of the aluminum element Al of the aluminoxane to the center element M of the metallocene complex, Al/M could be 10 to 1,000 or so, more preferably 100 or so.

On the other hand, the organic aluminum compound is preferably an organic aluminum compound represented by a general formula AlRR'R" (where R and R' each independently represent a monovalent hydrocarbon group having 1 to 10 carbon atoms, a halogen atom, or a hydrogen atom, R" represents a monovalent hydrocarbon group having 1 to 10 carbon atoms). Examples of the halogen atom include a fluorine atom, a chlorine atom, a bromine atom and an iodine atom, and a chlorine atom is preferred. Examples of the organic aluminum compound include a trialkylaluminum, a dialkylaluminum chloride, an alkylaluminum dichloride, a dialkylaluminum hydride, etc. Among these, a trialkylaluminum is preferred. Examples of the trialkylaluminum include triethylaluminum, triisobutylaluminum, etc. The content of the organic aluminum compound in the polymerization catalyst composition is preferably 1 to 50 times by mol the metallocene complex therein, more preferably about 10 times by mol.

Further, in the polymerization catalyst composition, the metallocene complex represented by the formulae (IX) and (X) or the half-metallocene cation complex represented by the formula (XI) may be combined with an appropriate co-catalyst suitable thereto so as to increase the cis-1,4-bond content and the molecular weight of the polymer to be obtained.

### -Third Polymerization Catalyst Composition-

Next, the third polymerization catalyst composition is described.

The third polymerization catalyst composition includes a polymerization catalyst composition that contains a metallocene composite catalyst represented by the following formula (XIII) as a rare earth element-containing compound:

RₐMX_{b}QY_{b} (XIII)

wherein R each independently represent an unsubstituted or substituted indenyl group, this R coordinates with M, M represents a lanthanoid element, scandium or yttrium, X each independently represent a monovalent hydrocarbon group having 1 to 20 carbon atoms, this X is in µ-coordination with M and Q, Q represents an element of Group 13 of the Periodic Table, Y each independently represents a monovalent hydrocarbon group having 1 to 20 carbon atoms, or a hydrogen atom, this Y coordinates with Q, and a and b are 2.

Preferred examples of the metallocene composite catalyst include a metallocene composite catalyst represented by the following formula (XIV): 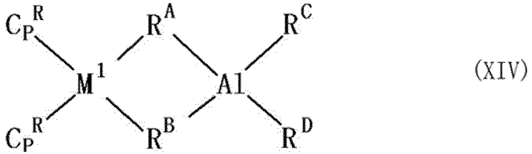 wherein M¹ represents a lanthanoid element, scandium or yttrium, Cp^{R} each independently represents an unsubstituted or substituted indenyl group, R^{A} and R^{B} each independently represent a monovalent hydrocarbon group having 1 to 20 carbon atoms, these R^{A} and R^{B} are in µ-coordination with M¹ and Al, R^{C} and R^{D} each independently represent a monovalent hydrocarbon group having 1 to 20 carbon atoms, or a hydrogen atom.

Using the above-mentioned metallocene composite catalyst, a polymer can be produced. As the metallocene composite catalyst, a catalyst that has been previously complexed with an aluminum catalyst may be used to reduce the amount of the alkylaluminum for use in multicomponent copolymer synthesis, or to omit the alkylaluminum. When a conventional catalyst system is used, a large amount of an alkylaluminum must be used in multicomponent copolymer synthesis. For example, in a conventional catalyst system, an alkylaluminum in an amount of 10 molar equivalents or more is needed relative to the metal catalyst therein, but an alkylaluminum in an amount of about 5 molar times may be enough the metallocene composite catalyst to exhibit an excellent catalytic effect.

In the metallocene composite catalyst, the metal M in the formula (XIII) is a lanthanoid element, scandium or yttrium. The lanthanoid element includes 15 elements of Atomic Numbers 57 to 71, and any of these may be the metal. Preferably, the metal M is samarium Sm, neodymium Nd, praseodymium Pr, gadolinium Gd, cerium Ce, holmium Ho, scandium Sc or yttrium Y

In the formula (XIII), R is independently an unsubstituted indenyl group or a substituted indenyl group, and this R coordinates with the metal M. Specific examples of the substituted indenyl group include a 1,2,3-trimethylindenyl group, a 1,2,4,5,6,7-hexamethylindenyl group, etc.

In the formula (XIII), Q is an element of Group 13 of the Periodic Table, and specifically includes boron, aluminum, gallium, indium, thallium, etc.

In the formula (XIII), X is independently a monovalent hydrocarbon group having 1 to 20 carbon atoms, and this X is in µ-coordination with M and Q. Here, the monovalent hydrocarbon group having 1 to 20 carbon atoms includes a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, etc. "µ-coordination" is meant to indicate a coordination mode that takes a crosslinking structure.

In the formula (XIII), Y is independently a monovalent hydrocarbon group having 1 to 20 carbon atoms, or a hydrogen atom, and this Y coordinates with Q. Here, the monovalent hydrocarbon group having 1 to 20 carbon atoms includes a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, etc.

In the formula (XIV), the metal M¹ is a lanthanoid element, scandium or yttrium. The lanthanoid element includes 15 elements of Atomic Numbers 57 to 71, and any of these may be the metal. The metal M¹ is preferably samarium Sm, neodymium Nd, praseodymium Pr, gadolinium Gd, cerium Ce, holmium Ho, scandium Sc or yttrium Y

In the formula (XIV), Cp^{R} is an unsubstituted indenyl group or a substituted indenyl group. Cp^{R} that has an indenyl ring as the basic skeleton may be represented by C₉H_{7-X}R_{X} or C₉H_{11-X}R_{X}. Here, x is an integer of 0 to 7, or 0 to 11. Preferably, R is independently a hydrocarbyl group or a metalloid group. The carbon number of the hydrocarbyl group is preferably 1 to 20, more preferably 1 to 10, even more preferably 1 to 8. Specifically, preferred examples of the hydrocarbyl group include a methyl group, an ethyl group, a phenyl group, a benzyl group, etc. On the other hand, examples of metalloid of the metalloid group include germyl Ge, stannyl Sn and silyl Si. Preferably, the metalloid group has a hydrocarbyl group, and the hydrocarbyl group that the metalloid may have is the same as the above-mentioned hydrocarbyl group. Specifically, the metalloid group includes a trimethylsilyl group, etc.

Specifically, the substituted indenyl group includes a 2-phenylindenyl group, a 2-methylindenyl group, etc. Two Cp^{R}'s in the formula (XIV) may be the same as or different from each other.

In the formula (XIV), R^{A} and R^{B} are each independently a monovalent hydrocarbon group having 1 to 20 carbon atoms, and these R^{A} and R^{B} are in µ-coordination with M¹ and Al. Here, the monovalent hydrocarbon group having 1 to 20 carbon atoms includes a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, etc. "µ-coordination" is meant to indicate a coordination mode that takes a crosslinking structure.

In the formula (XIV), R^{C} and R^{D} each are independently a monovalent hydrocarbon group having 1 to 20 carbon atoms, or a hydrogen atom. Here, the monovalent hydrocarbon group having 1 to 20 carbon atoms includes a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, etc.

The metallocene composite catalyst can be obtained, for example, by reacting a metallocene complex represented by the following formula (XV): 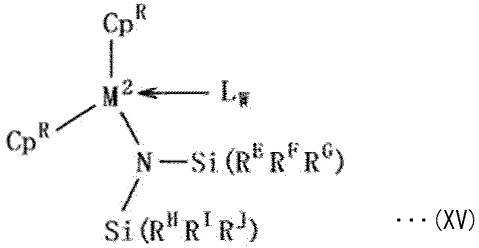 wherein M² represents a lanthanoid element, scandium or yttrium, Cp^{R} each independently represents an unsubstituted or substituted indenyl group, R^{E} to R^{J} each independently represent an alkyl group having 1 to 3 carbon atoms, or a hydrogen atom, L represents a neutral Lewis base, w represents an integer of 0 to 3, and an organic aluminum compound represented by AlR^{K}R^{L}R^{M}. The reaction temperature may be room temperature or so, and therefore the catalyst can be produced under a mild condition. Not defined, the reaction time may be a few hours to tens of hours or so. The reaction solvent is not specifically limited, but is preferably a solvent capable of dissolving raw materials and products. For example, toluene or hexane may be used. The structure of the metallocene composite catalyst is preferably determined through ¹H-NMR or X-ray structural analysis.

In the metallocene complex represented by the formula (XV), Cp^{R} is an unsubstituted indenyl or substituted indenyl group, and has the same meaning as Cp^{R} is in the formula (XIV). In the formula (XV), the metal M² is a lanthanoid element, scandium or yttrium, and has the same meaning as M¹ in the formula (XIV).

The metallocene complex represented by the formula (XV) contains a silylamide ligand [-N(SiR₃)₂]. The group R (groups R^{E} to R^{J}) contained in the silylamide ligand each independently represent an alkyl group having 1 to 3 carbon atoms, or a hydrogen atom. Preferably, at least one of R^{E} to R^{J} is a hydrogen atom. When at least one of R^{E} to R^{J} is a hydrogen atom, the catalyst is easy to synthesis. Further, the alkyl group is preferably a methyl group.

The metallocene complex represented by the formula (XV) further contains 0 to 3, preferably 0 to 1 neutral Lewis base L. Here, examples of the neutral Lewis base L include tetrahydrofuran, diethyl ether, dimethylaniline, trimethyl phosphine, lithium chloride, neutral olefins, neutral diolefins, etc. Here, in the case where the complex contains plural neutral Lewis bases L's, the neutral Lewis bases L's may be the same or different.

The metallocene complex represented by the formula (XV) may exist as a monomer, or may exist as a dimer or a more multimeric polymer.

On the other hand, the organic aluminum compound to be used in producing the metallocene composite catalyst is represented by AlR^{K}R^{L}R^{M}, wherein R^{K} and R^{L} each independently represent a monovalent hydrocarbon group having 1 to 20 carbon atoms, or a hydrogen atom, R^{M} represents a monovalent hydrocarbon group having 1 to 20 carbon atoms, and R^{M} may be the same as or different from the above R^{K} or R^{L}. The monovalent hydrocarbon group having 1 to 20 carbon atoms includes a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, etc.

Specific examples of the organic aluminum compound include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride; ethylaluminum dihydrides, n-propylaluminum dihydrides, isobutylaluminum dihydrides, etc. Among these, triethylaluminum, triisobutylaluminum, diethylaluminum hydride, and diisobutylaluminum hydride are preferred. One alone or two or more kinds of these organic aluminum compounds may be used either singly or as combined. The amount of the organic aluminum compound to be used for producing the metallocene composite catalyst is preferably 1 to 50 times by mol the metallocene complex, more preferably about 10 times by mol.

The third polymerization catalyst composition may contain the above-mentioned metallocene composite catalyst and a boron anion, and preferably further contains any other component that may be contained in ordinary metallocene catalyst-containing polymerization catalyst compositions, for example, a co-catalyst, etc. The metallocene composite catalyst and the boron anion, as combined, may be referred to as a two-component catalyst. The third polymerization catalyst composition further contains a boron anion, like the metallocene composite catalyst, and therefore in this, the content of each monomer component in the polymer to be produced can be controlled in any desired manner.

The boron anion to constitute the two-component catalyst in the third polymerization catalyst composition specifically includes a tetravalent boron anion. Examples of the anion include a tetraphenylborate, a tetrakis(monofluorophenyl)borate, a tetrakis(difluorophenyl)borate, a tetrakis(trifluorophenyl)borate, a tetrakis(tetrafluorophenyl)borate, a tetrakis(pentafluorophenyl)borate, a tetrakis(tetrafluoromethylphenyl)borate, a tetra(tolyl)borate, a tetra(xylyl)borate, a (triphenyl,pentafluorophenyl)borate, a [tris(pentafluorophenyl),phenyl]borate, a tridecahydride-7,8-dicarbaundecaborate, etc. Among these, a tetrakis(pentafluorophenyl)borate is preferred.

The boron anion may be used as an ionic compound, as combined with a cation. Examples of the cation include a carbonium cation, an oxonium cation, an amine cation, a phosphonium cation, a cycloheptatrienyl cation, a transition metal-having ferrocenium cation, etc. The carbonium cation includes a tri-substituted carbonium cation such as a triphenylcarbonium cation, a tri(substituted phenyl)carbonium cation, etc. Specifically, the tri(substituted phenyl)carbonyl cation includes a tri(methylphenyl)carbonium cation, etc. The amine cation includes a trialkylammonium cation such as a trimethylammonium cation, a triethylammonium cation, a tripropylammonium cation, a tributylammonium cation, etc.; an N,N-dialkylanilinium cation such as an N,N-dimethylanilinium cation, an N,N-diethylanilinium cation, an N,N,2,4,6-pentamethylanilinium cation, etc.; and a dialkylammonium cation such as a diisopropylammonium cation, a dicyclohexylammonium cation, etc. The phosphonium cation includes a triarylphosphonium cation such as a triphenylphosphonium cation, a tri(methylphenyl)phosphonium cation, a tri(dimethylphenyl)phosphonium cation, etc. Among these cations, an N,N-dialkylanilinium cation and a carbonium cation are preferred, and an N,N-dialkylanilinium cation is more preferred. Accordingly, the ionic compound is preferably N,N-dimethylanilinium tetrakis(pentafluorophenyl)borate, triphenylcarbonium tetrakis(pentafluorophenyl)borate, etc. The ionic compound composed of a boron anion and a cation is added preferably in an amount of 0.1 to 10 times by mol the metallocene composite catalyst, more preferably about 1 time by mol.

When a boron anion exists in the reaction system of reacting a metallocene complex represented by the above formula (XV) and an organic aluminum compound, a metallocene composite catalyst of the above formula (XIV) could not be produced. Accordingly, in preparing the third polymerization catalyst composition, the metallocene composite catalyst is previously synthesized, and after the metallocene composite catalyst is isolated and purified, this must be combined with a boron anion.

Preferred examples of the co-catalyst usable in the third polymerization catalyst composition include the organic aluminum compound represented by AlR^{K}R^{L}R^{M}, as well as aluminoxanes, etc. The aluminoxane is preferably an alkylaluminoxane, and examples thereof include methylaluminoxane (MAO), modified methylaluminoxane, etc. The modified methylaluminoxane is preferably MMAO-3A (manufactured by Tosoh Finechem Corporation), etc. One alone or two or more kinds of these aluminoxanes may be used either singly or as combined.

### -Fourth Polymerization Catalyst Composition-

The fourth polymerization catalyst composition contains a rare earth element compound and a compound having a cyclopentadiene skeleton.

The fourth polymerization catalyst composition must contain:
a rare earth element compound (hereinafter may be referred to as "component (A2)"), and
a compound selected from the group consisting of a substituted or unsubstituted cyclopentadiene, a substituted or unsubstituted indene (indenyl group-having compound), and a substituted or unsubstituted fluorene (hereinafter may be referred to as "component (B2)").

The fourth polymerization catalyst composition may further contain:
an organic metal compound (hereinafter may be referred to as "component (C2)"),
an aluminoxane compound (hereinafter may be referred to as "component (D2)"), and
a halogen compound (hereinafter may be referred to as "component (E2)").

Preferably, the fourth polymerization catalyst composition has high solubility for aliphatic hydrocarbons, and preferably forms a homogeneous solution in an aliphatic hydrocarbon. Here, examples of the aliphatic hydrocarbon include hexane, cyclohexane, pentane, etc.

Also preferably, the fourth polymerization catalyst composition does not contain an aromatic hydrocarbon. Here, examples of the aromatic hydrocarbon include benzene, toluene, xylene, etc.

"Not containing an aromatic hydrocarbon" means that the ratio of the aromatic hydrocarbon, if any, in the polymerization catalyst composition is less than 0.1% by mass.

The component (A2) may be a rare earth element-containing compound or a reaction product of a rare earth element-containing compound and a Lewis base, having a metal-nitrogen bond (M-N bond).

Examples of the rare earth element-containing compound include a compound containing scandium, yttrium or a lanthanoid element composed of elements of Atomic Numbers 57 to 71, etc. Specifically, the lanthanoid element includes lanthanum, cerium, praseodymium, neodymium, promethium, samarium, europium, gadolinium, terbium, dysprosium, holmium, erbium, thulium, ytterbium, lutetium.

Examples of the Lewis base include tetrahydrofuran, diethyl ether, dimethylaniline, trimethyl phosphine, lithium chloride, neutral olefins, neutral diolefins, etc.

Here, preferably, the rare earth element-containing compound or the reaction product of a rare earth element-containing compound and a Lewis base does not have a bond of rare earth element and carbon. In the case where the reaction product of a rare earth element-containing compound and a Lewis base does not have a rare earth element-carbon bond, the reaction product is stable and is easy to handle.

One alone or two or more kinds of the above components (A2) may be used either singly or as combined.

Here, the component (A2) is preferably a compound represented by a formula (1):

M-(AQ¹)(AQ²)(AQ³) (1)

wherein M represents at least one element selected from the group consisting of scandium, yttrium and a lanthanoid element, AQ¹, AQ² and AQ³ may be the same as or different from each other, each representing a functional group, and A represents at least one selected from the group consisting of nitrogen, oxygen and sulfur, provided that the formula has at least one M-A bond.

Specifically, the lanthanoid element includes lanthanum, cerium, praseodymium, neodymium, promethium, samarium, europium, gadolinium, terbium, dysprosium, holmium, erbium, thulium, ytterbium, lutetium.

The above-mentioned compound can enhance the catalytic activity in the reaction system, can shorten the reaction time and can elevate the reaction temperature.

M in the formula (1) is, especially from the viewpoint of enhancing catalytic activity and reaction control performance, preferably gadolinium.

In the case where A in the formula (1) is nitrogen, the functional group represented by AQ¹, AQ² or AQ³ (that is, NQ¹, NQ² or NQ³) includes an amino group, etc. In this case, the formula has three M-N bonds.

Examples of the amino group include an aliphatic amino group such as a dimethylamino group, a diethylamino group, a diisopropylamino group, etc.; an arylamino group such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, a 2,4,6-tri-tert-butylphenylamino group, etc.; and a bistrialkylsilylamino group such as a bistrimethylsilylamino group, etc. In particular, from the viewpoint of solubility for aliphatic hydrocarbons and aromatic hydrocarbons, a bistrimethylsilylamino group is preferred. One alone or two or more kinds of the amino groups may be used either singly or as combined.

According to the above-mentioned constitution, the component (A2) can be a compound having three M-N bonds, in which each bond is chemically equivalent, and accordingly, the compound can have a stable structure and is easy to handle.

In addition, according to the constitution, the catalytic activity in the reaction system can be further enhanced. Consequently, the reaction time can be shortened more and the reaction temperature can be elevated more.

In the case where A is oxygen, examples of the component (A2) represented by the formula (1) include, though not specifically limited thereto, a rare earth alcoholate represented by the following formula (1a):

(RO)₃M (1a),

and a rare earth carboxylate represented by the following formula (1b):

(R-CO₂)₃M (1b).

Here, in the formulae (1a) and (1b), R may be the same or different, and represents an alkyl group having 1 to 10 carbon atoms.

Preferably, the component (A2) does not have a bond of rare earth element and carbon, and therefore, the compound represented by the formula (1a) or the compound represented by the formula (1b) is favorably used.

In the case where A is sulfur, examples of the component (A2) represented by the formula (1) include, though not specifically limited thereto, a rare earth alkyl thiolate represented by the following formula (1c):

(RS)₃M (1c),

and a compound represented by the following formula (1d):

(R-CS₂)₃M (1d).

Here, in the formulae (1c) and (1d), R may be the same or different, and represents an alkyl group having 1 to 10 carbon atoms.

Preferably, the component (A2) does not have a bond of rare earth element and carbon, and therefore, the compound represented by the formula (1c) or the compound represented by the formula (1d) is favorably used.

The component (B2) is a compound selected from the group consisting of a substituted or unsubstituted cyclopentadiene, a substituted or unsubstituted indene (indenyl group-having compound) and a substituted or unsubstituted fluorene.

One alone or two or more kinds of the components for the component (B2) may be used either singly or as combined.

Examples of the substituted cyclopentadiene include pentamethylcyclopentadiene, tetramethylcyclopentadiene, isopropylcyclopentadiene, trimethylsilyl-tetramethylcyclopentadiene, etc.

Examples of the substituted or unsubstituted indene include indene, 2-phenyl-1H-indene, 3-benzyl-1H-indene, 3-methyl-2-phenyl-1H-indene, 3-benzyl-2-phenyl-1H-indene, 1-benzyl-1H-indene, etc. In particular, from the viewpoint of reducing molecular weight distribution, 3-benzyl-1H-indene and 1-benzyl-1H-indene are preferred.

Examples of the substituted fluorene include trimethylsilylfluorene, isopropylfluorene, etc.

According to the above-mentioned constitution, the conjugated electrons that the cyclopentadiene skeleton-having compound can provide may be increased to further enhance the catalytic activity in the reaction system. Consequently, the reaction time can be shortened further, and the reaction temperature can be elevated more.

The organic metal compound (component (C2)) is a compound represented by a formula (2):

YR⁴ₐR⁵_{b}R⁶_{c} (2)

wherein Y represents a metal element selected from the group consisting of elements of Groups 1, Group 2, Group 12 and Group 13 of the Periodic Table, R⁴ and R⁵ each represent a monovalent hydrocarbon group having 1 to 10 carbon atoms, or a hydrogen atom, R⁶ represents a monovalent hydrocarbon group having 1 to 10 carbon atoms, and R⁴, R⁵ and R⁶ may be the same as or different from each other, when Y is a metal element of Group 1, a is 1 and b and c are 0, when Y is a metal element of Group 2 or Group 12, a and b are 1 and c is 0, and when Y is a metal element of Group 13, a, b and c are 1.

Here, from the viewpoint of enhancing catalytic activity, preferably, at least one of R¹, R² and R³ in the formula (2) differs from the others.

In detail, the component (C2) is preferably an organic aluminum compound represented by a formula (3):

AlR⁷R⁸R⁹ (3)

wherein R⁷ and R⁸ each represent a monovalent hydrocarbon group having 1 to 10 carbon atoms, or a hydrogen atom, R⁹ represents a monovalent hydrocarbon group, and R⁷, R⁸ and R⁹ may be the same or different.

Examples of the organic aluminum compound include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride; ethylaluminum dihydrides, n-propylaluminum dihydrides, isobutylaluminum dihydrides, etc. Triethylaluminum, triisobutylaluminum, diethylaluminum hydride, diisobutylaluminum hydride are preferred, and diisobutylaluminum hydride is more preferred.

One alone or two or more kinds of these organic aluminum compounds may be used either singly or as combined.

The aluminoxane compound (component (D2)) is a compound obtained by bringing an organic aluminum compound into contact with a condensing agent.

Using the component (D2), the catalytic activity in the polymerization reaction system can be enhanced more. Consequently, the reaction time can be shortened more and the reaction temperature can be elevated more.

Here, examples of the organic aluminum compound include a trialkylaluminum such as trimethylaluminum, triethylaluminum, triisobutylaluminum, etc., and a mixture thereof, etc. In particular, trimethylaluminum and a mixture of trimethylaluminum and tributylaluminum are preferred.

Examples of the condensing agent include water, etc.

Examples of the component (D2) include an aluminoxane represented by a formula (4):

-(Al(R¹⁰)O)ₙ- (4)

wherein R¹⁰ represents a monovalent hydrocarbon group having 1 to 10 carbon atoms, and a part of the hydrocarbon group may be substituted with a halogen and/or an alkoxy group; R¹⁰ may be the same or different in the repeating units; and n is 5 or more.

The molecular structure of the aluminoxane may be linear or cyclic.
n is preferably 10 or more.

Examples of the hydrocarbon group for R¹⁰ include a methyl group, an ethyl group, a propyl group, an isobutyl group, etc., and a methyl group is especially preferred. One alone or two or more kinds of the hydrocarbon groups may be used either singly or as combined. The hydrocarbon group for R¹⁰ is preferably a combination of a methyl group and an isobutyl group.

The aluminoxane preferably has high solubility for aliphatic hydrocarbon groups and preferably has low solubility for aromatic hydrocarbons. For example, an aluminoxane commercially sold as a hexane solution is preferred.

Here, aliphatic hydrocarbons include hexane, cyclohexane, etc.

In particular, the component (D2) may be a modified aluminoxane represented by a formula (5):

-(Al(CH₃)ₓ(i-C₄H₉)_{y}O)ₘ- (5)

wherein x + y is 1; m is 5 or more (hereinafter may be referred to as "TMAO"). Examples of TMAO include TMAO341, a product name by Tosoh Finechem Corporation.

The component (D2) may also be a modified aluminoxane represented by a formula (6):

-(Al(CH₃)_{0.7}(i-C₄H₉)_{0.30})ₖ- (6)

wherein k is 5 or more (hereinafter may be referred to as "MMAO"). Examples of MMAO include MMAO-3A, a product name by Tosoh Finechem Corporation.

Further, the component (D2) may be especially a modified aluminoxane represented by a formula (7):

-[(CH₃)AlO]ᵢ- (7)

wherein i is 5 or more (hereinafter may be referred to as "PMAO"). Examples of PMAO include TMAO-211, a product name by Tosoh Finechem Corporation.

The component (D2) is, from the viewpoint of enhancing the effect of increasing the catalytic activity, preferably MMAO or TMAO among the above-mentioned MMAO, TMAO and PMAO, and is, from the viewpoint of further enhancing the effect of increasing the catalytic activity, more preferably TMAO.

The halogen compound (component (E2)) is at least one compound selected from the group consisting of a halogen-containing compound of a Lewis acid (hereinafter may be referred to as "component (E2-1)"), a complex compound of a metal halide and a Lewis base (hereinafter may be referred to as "component (E2-2)"), and an active halogen-containing organic compound (hereinafter may be referred to as "component (E2-3)").

These compounds react with the component (A2), that is, a rare earth element-containing compound or a reaction product of a rare earth element-containing compound and a Lewis base having an M-N bond to form a cationic transition metal compound, a halogenated transition metal compound and/or a transition metal compound where the transition metal center is short in electrons.

Using the component (E2) may increase the cis-1,4-bond content in the resultant conjugated diene copolymer.

Examples of the component (E2-1) include a halogen-containing compound that contains an element of Group 3, Group 4, Group 5, Group 6, Group 8, Group 13, Group 14 or Group 15, etc., and in particular, an aluminum halide or an organic metal halide is preferred.

Examples of the halogen-containing compound of a Lewis acid include titanium tetrachloride, tungsten hexachloride, tri(pentafluorophenyl) borate, methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesqui-bromide, methylaluminum sesqui-chloride, ethylaluminum sesqui-bromide, ethylaluminum sesqui-chloride, aluminum tribromide, tri(pentafluorophenyl)aluminum, dibutyltin dichloride, tin tetrachloride, phosphorus trichloride, phosphorus pentachloride, antimony trichloride, antimony pentachloride, etc. In particular, ethylaluminum dichloride, ethylaluminum dibromide, diethylaluminum chloride, diethylaluminum bromide, ethylaluminum sesqui-chloride, ethylaluminum sesqui-bromide are preferred.

The halogen is preferably chlorine or bromine.

One alone or two or more kinds of the halogen-containing compounds of Lewis acids may be used either singly or as combined.

Examples of the metal halide to be used for the component (E2-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, gold bromide, etc. Magnesium chloride, calcium chloride, barium chloride, zinc chloride, manganese chloride and copper chloride are preferred, and magnesium chloride, zinc chloride, manganese chloride and copper chloride are more preferred.

The Lewis base to be used for the component (E2-2) is preferably a phosphorus compound, a carbonyl compound, a nitrogen compound, an ether compound and an alcohol.

Examples of the compounds include tributyl phosphate, tri-2-ethylhexyl phosphate, triphenyl phosphate, tricresyl phosphate, triethyl phosphine, tributyl phosphine, triphenyl phosphine diethyl phosphinoethane, diphenylphosphinoethane, acetylacetone, benzoylacetone, propionylacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, Versatic acid, triethylamine, N,N-dimethylacetamide, tetrahydrofuran, diphenyl ether, 2-ethylhexyl alcohol, oleyl alcohol, stearyl alcohol, phenol, benzyl alcohol. 1-decanol, lauryl alcohol, etc. In particular, tri-2-ethylhexyl phosphate, tricresyl phosphate, acetylacetone, 2-ethylhexanoic acid, Versatic acid, 2-ethylhexyl alcohol, 1-decanol, and lauryl alcohol are preferred.

Regarding the molar number of the Lewis base, preferably, the base is reacted in a ratio of 0.01 to 30 mol, more preferably 0.5 to 10 mol relative to 1 mol of the metal halide. Using a reaction product with the Lewis base can reduce the metal to remain in the produced polymer.

Examples of the (E2-3) component include benzyl chloride, etc.

The ratio by mass of the components to constitute the fourth polymerization catalyst composition is described below.

The ratio by mol of the component (B2) (compound selected from the group consisting of a substituted or unsubstituted cyclopentadiene, a substituted or unsubstituted indene and a substituted or unsubstituted fluorene) to the component (A2) (rare earth element compound) is, from the viewpoint of sufficiently attaining catalytic activity, preferably more than 0, more preferably 0.5 or more, and even more preferably 1 or more, and is, from the viewpoint of suppressing catalytic activity reduction, preferably 3 or less, more preferably 2.5 or less, even more preferably 2.2 or less.

The ratio by mol of the component (C2) (organic metal compound) to the component (A2) is, from the viewpoint of improving the catalytic activity in the reaction system, preferably 1 or more, more preferably 5 or more, and is, from the viewpoint of suppressing catalytic activity reduction in the reaction system, preferably 50 or less, more preferably 30 or less, and is specifically, even more preferably about 10.

The ratio by mol of aluminum in the component (D2) (aluminoxane) to the rare earth element in the component (A2) is, from the viewpoint of improving the catalytic activity in the reaction system, preferably 10 or more, more preferably 100 or more, and is, from the viewpoint of suppressing catalytic activity reduction in the reaction system, preferably 1,000 or less, more preferably 800 or less.

The ratio by mol of the component (E2) (halogen compound) to the component (A2) is, from the viewpoint of enhancing catalytic activity, preferably 0 or more, more preferably 0.5 or more, even more preferably 1.0 or more, and is, from the viewpoint of maintaining the solubility of the component (E2) and preventing the catalytic activity from lowering, preferably 20 or less, more preferably 10 or less.

Accordingly, within the above range, the effect of increasing the cis-1,4-bond content in the conjugated diene polymer can be enhanced.

Preferably, the fourth polymerization catalyst composition does not contain an ionic compound composed of a non-coordinating anion (for example, tetravalent boron anion, etc.) and a cation (for example, carbonium cation, oxonium cation, ammonium cation, phosphonium cation, cycloheptatrienyl cation, transition metal-having ferrocenium cation, etc.). Here, the ionic compound has high solubility for aromatic hydrocarbons and has low solubility for hydrocarbons. Consequently, the polymerization catalyst composition not containing such an ionic compound can produce a conjugated diene polymer while further reducing environmental load and production cost.

"Not containing an ionic compound" means that the proportion of an ionic compound, if any, in the polymerization catalyst composition is less than 0.01% by mass.

### <Coupling Step>

The coupling step is a step of conducting a reaction (coupling reaction) modifying at least a part (for example, the terminal) of the polymer chain of the multicomponent copolymer obtained in the previous polymerization step.

In the coupling step, the coupling reaction is preferably carried out when the polymerization reaction has reached 100%.

The coupling agent to be used for the coupling reaction is not specifically limited, and may be appropriately selected depending on the intended purpose. Examples of the coupling agent include a tin-containing compound such as bis(maleic acid-1-octadecyl)dioctyltin(IV), etc.; an isocyanate compound such as 4,4'-diphenylmethane diisocyanate, etc.; and an alkoxysilane compound such as glycidylpropyltrimethoxysilane, etc. One alone or two or more kinds of these may be used either singly or as combined.

Among these, bis(maleic acid-1-octadecyl)dioctyltin(IV) is preferred from the viewpoint of reaction efficiency and low gel formation.

The coupling reaction increases number-average molecular weight (Mn).

### <Washing Step>

The washing step is a step of washing the multicomponent copolymer obtained in the previous polymerization step. The medium to be used for washing is not specifically limited and may be appropriately selected depending on the intended purpose. For example, methanol, ethanol, 2-propanol or the like may be used, and in the case where a Lewis acid-derived catalyst is used as the polymerization catalyst, in particular, an acid (for example, hydrochloric acid, sulfuric acid, nitric acid) may be added to the solvent for use for washing. The amount of the acid to be added is preferably 15 mol% or less of the solvent. When the amount of the acid is more than the above, the acid may remain in the multicomponent copolymer to have some negative influence on kneading and reaction for vulcanization.

In the washing step, the amount of the residual catalyst to remain in the multicomponent copolymer can be favorably lowered.

### (Rubber Composition)

The rubber composition of the present invention contains at least the multicomponent copolymer of the present invention and may optionally contain a filler, a crosslinking agent and any other rubber component, etc.

The other rubber component is not specifically limited, and may be appropriately selected depending on the intended purpose, and examples thereof include a polyisoprene, a butadiene rubber (BR), an acrylonitrile-butadiene rubber (NBR), a chloroprene rubber, an ethylene-propylene rubber (EPM), an ethylene-propylene-non-conjugated diene rubber (EPDM), a polysulfide rubber, a silicone rubber, a fluorine rubber, an urethane rubber, etc. One alone or two or more kinds of these may be used either singly or as combined.

The content of the multicomponent copolymer relative to the whole rubber components, namely, the sum total of the multicomponent copolymer of the present invention and the other rubber components, is preferably 4% by mass or more, more preferably 5% by mass or more, further preferably 10% by mass or more, especially preferably 40% by mass or more.

The rubber composition may contain, if desired, a filler for the purpose of improving the reinforcing performance thereof. The amount of the filler to be added is not specifically limited and may be appropriately selected depending on the intended purpose. Preferably, the amount is 10 to 100 parts by mass relative to 100 parts by mass of the rubber component, more preferably 20 to 80 parts by mass, even more preferably 30 to 60 parts by mass. When the amount thereof is 10 parts by mass or more, the filler can exhibit the effect of enhancing reinforcing performance, and when 100 parts by mass or less, good workability can be maintained while evading significant reduction in the advantage of low hysteresis loss.

The filler includes, though not specifically limited thereto, carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, barium sulfate, etc. Among these, use of carbon black is preferred. One alone or two or more kinds of these may be used either singly or as combined.

The carbon black is not specifically limited and may be appropriately selected depending on the intended purpose, and examples thereof include FEF, GPF, SRF, HAF, N339, IISAF, ISAF, SAF, etc. One alone or two or more kinds of these may be used either singly or as combined.

The nitrogen adsorption specific surface area of the carbon black (N₂SA, measured according to JIS K 6217-2:2001) is not specifically limited and may be appropriately selected depending on the intended purpose, and is preferably 20 to 100 m²/g, more preferably 35 to 80 m²/g. When the nitrogen adsorption specific surface area of the carbon black (N₂SA) is 20 m²/g or more, the resultant rubber composition may have improved durability and may secure sufficient resistance of cracking growth; and when 100 m²/g or less, good workability can be maintained while evading significant reduction in the advantage of low hysteresis loss.

If desired, a crosslinking agent may be used for the rubber composition. The crosslinking agent is not specifically limited, and may be appropriately selected depending on the intended purpose, and examples thereof include a sulfur-based crosslinking agent, an organic peroxide-based crosslinking agent, an inorganic crosslinking agent, a polyamine-based crosslinking agent, a resin-based crosslinking agent, a sulfur compound-based crosslinking agent, an oxime-nitrosamine-based crosslinking agent, etc. Among these, a sulfur-based crosslinking agent (vulcanizing agent) is preferred for the rubber composition for tires.

The content of the crosslinking agent is not specifically limited, and may be appropriately selected depending on the intended purpose. Preferably, the content is 0.1 to 20 parts by mass relative to 100 parts by mass of the rubber component. When the content of the crosslinking agent is 0.1 parts by mass or more, crosslinking can go on favorably; and when the content of the crosslinking agent is 20 parts by mass or less, crosslinking during kneading can be prevented and crosslinked products having good physical properties can be favorably obtained.

In the case where the vulcanizing agent is used, a vulcanization accelerator may be used additionally. The vulcanization accelerator includes a guanidine compound, an aldehyde-amine compound, an aldehyde-ammonia compound, a thiazole compound, a sulfenamide compound, a thiourea compound, a thiuram compound, a dithiocarbamate compound, a xanthate compound, etc. Further if desired, for the rubber composition of the present invention, any known components such as a softener, a vulcanization aid, a colorant, a flame retardant, a lubricant, a foaming agent, a plasticizer, a processing aid, an antioxidant, an antiaging agent, a scorching inhibitor, an UV inhibitor, an antistatic agent, a discoloration inhibitor and other ingredients may be used depending on the intended purpose thereof.

### (Crosslinked Rubber Composition)

The rubber composition of the present invention may be crosslinked to give a crosslinked rubber composition. The crosslinking condition is not specifically limited and may be appropriately selected depending on the intended purpose. Preferably, the temperature is 120 to 200°C, and the heating time is 1 minute to 900 minutes. The crosslinked rubber composition uses a non-conjugated diene compound as one monomer for the rubber component, and therefore, the crosslinking properties are good and consequently the mechanical properties thereof are better.

### (Tire)

The tire of the present invention is not specifically limited so far as it uses the rubber composition of the present invention, and may be appropriately selected depending on the intended purpose. The tire uses the rubber composition that contains the multicomponent copolymer of the present invention, and therefore can be produced with high workability and, in addition, the tire is excellent in the fracture performance at high temperatures and high in the durability and the weather resistance. The site of the tire in which the rubber composition of the present invention is to be used is not specifically limited, and may be appropriately selected depending on the intended purpose. For example, the rubber composition may be used in treads, base treads, side walls, side-reinforcing rubbers, bead fillers, etc. Among these, the rubber composition of the present invention is advantageously used in treads from the viewpoint of durability.

As the method for producing the tire, any ordinary method is employable. For example, members generally used in tire production, such as a carcass layer, a belt layer, a tread layer and the like formed of at least one selected from the group consisting of an unvulcanized rubber composition and a cord are layered in order, on a drum for tire formation, and then the drum is removed to give a green tire. Next, the green tire is vulcanized under heat according to an ordinary method to produce a desired tire (for example, pneumatic tire).

### (Use other than tire)

The rubber composition of the present invention can be used for vibrationproof rubber, seismic isolation rubbers, belts such as conveyor belts, rubber crawlers, various hoses and the like, in addition to use for tires.

### Examples

The present invention is described in more detail with reference to Examples given below, but the present invention is not restricted at all by these Examples.

### (Production Example 1: Copolymer A)

In a glove box in a nitrogen atmosphere, 0.04 mmol of tris[N,N-bis(trimethylsilyl)amide]gadolinium, 0.044 mmol of 1-benzyldimethylsilyl-3-benzylindene, and 0.32 mmol of trimethylaluminum were put into a glass container, and 4 mL of hexane was added thereto to give a catalyst solution-1. The catalyst solution-1 was stirred at room temperature for 72 hours.

13 g of 5-ethylidene-2-norbornene, 50 g of styrene and 230 mL of toluene were added to a fully-dried 1000-mL pressure-tight stainless reactor.

In a glove box in a nitrogen atmosphere, 0.044 mmol of dimethylanilinium tetrakis(pentafluorophenyl)borate [Me₂NHPhB(C₆F₅)₄] and 0.30 mmol of diisobutylaluminum hydride were added to the catalyst solution-1 prepared in the above, and 20 mL of toluene was added thereto to prepare a catalyst solution-2.

The catalyst solution-2 was added to the pressure-tight stainless reactor, and heated at 90°C. Next, ethylene was put into the pressure-tight stainless reactor under a pressure of 1.5 MPa to carry out copolymerization for a total of 2.5 hours at 90°C. Next, 1 mL of an isopropanol solution of 5 mass% 2,2'-methylene-bis(4-ethyl-6-t-butylphenol) (NS-5) was added to the pressure-tight stainless reactor to terminate the reaction.

Next, the copolymer was separated using a large amount of methanol, and dried in vacuum at 50°C to be a copolymer A. The yield of the resultant tercopolymer, copolymer A was 40 g.

### (Production Example 2: Copolymer B)

In a glove box in a nitrogen atmosphere, 0.10 mmol of tris[N,N-bis(trimethylsilyl)amide]gadolinium, 0.110 mmol of 1-benzyldimethylsilyl-3-methylindene, and 0.80 mmol of trimethylaluminum were put into a glass container, and 8 mL of hexane was added thereto to give a catalyst solution-1. The catalyst solution was stirred at room temperature for 72 hours.

20 g of 5-ethylidene-2-norbornene, 100 g of styrene and 692 mL of toluene were added to a fully-dried 1000-mL pressure-tight stainless reactor.

In a glove box in a nitrogen atmosphere, 0.110 mmol of dimethylanilinium tetrakis(pentafluorophenyl)borate [Me₂NHPhB(C₆F₅)₄] and 0.45 mmol of diisobutylaluminum hydride were added to the catalyst solution-1 prepared in the above, and 40 mL of toluene was added thereto to prepare a catalyst solution-2.

The catalyst solution-2 was added to the pressure-tight stainless reactor, and heated at 85°C. Next, ethylene was put into the pressure-tight stainless reactor under a pressure of 1.5 MPa to carry out copolymerization for a total of 3.0 hours at 85°C. Next, 1 mL of an isopropanol solution of 5 mass% 2,2'-methylene-bis(4-ethyl-6-t-butylphenol) (NS-5) was added to the pressure-tight stainless reactor to terminate the reaction.

Next, the copolymer was separated using a large amount of methanol, and dried in vacuum at 50°C to be a copolymer B. The yield of the resultant tercopolymer, copolymer B was 76 g.

### (Production Example 3: Copolymer C)

In a glove box in a nitrogen atmosphere, 0.120 mmol of tris[N,N-bis(trimethylsilyl)amide]gadolinium, 0.132 mmol of 1-benzyldimethylsilyl-3-methylindene, and 0.96 mmol of trimethylaluminum are put into a glass container, and 8 mL of hexane is added thereto to give a catalyst solution-1. The catalyst solution-1 is stirred at room temperature for 72 hours.

35 g of 5-ethylidene-2-norbornene, 100 g of styrene and 692 mL of toluene are added to a fully-dried 1000-mL pressure-tight stainless reactor.

In a glove box in a nitrogen atmosphere, 0.132 mmol of dimethylanilinium tetrakis(pentafluorophenyl)borate [Me₂NHPhB(C₆F₅)₄] and 0.30 mmol of diisobutylaluminum hydride are added to the catalyst solution-1 prepared in the above, and 40 mL of toluene is added thereto to prepare a catalyst solution-2.

The catalyst solution-2 is added to the pressure-tight stainless reactor, and heated at 90°C. Next, ethylene is put into the pressure-tight stainless reactor under a pressure of 1.3 MPa to carry out copolymerization for a total of 3.5 hours at 90°C. Next, 1 mL of an isopropanol solution of 5 mass% 2,2'-methylene-bis(4-ethyl-6-t-butylphenol) (NS-5) is added to the pressure-tight stainless reactor to terminate the reaction.

Next, the copolymer is separated using a large amount of methanol, and dried in vacuum at 50°C to be a copolymer C. The yield of the resultant tercopolymer, copolymer C is 65 g.

### (Copolymer a)

EP35 from JSR Corporation (ethylene-propylene-ethylidene-norbornene tercopolymer, ethylidene-norbornene content: 8.1% by mass, ethylene content: 52% by mass) was used as a copolymer a for comparison.

### (Production Example 4: copolymer b)

In a glove box in a nitrogen atmosphere, 0.06 mmol of tris[N,N-bis(trimethylsilyl)amide]gadolinium, 0.066 mmol of 1-benzyldimethylsilylindene, and 0.44 mmol of trimethylaluminum were put into a glass container, and 5 mL of hexane was added thereto to give a catalyst solution-1. The catalyst solution-1 was stirred at room temperature for 72 hours.

18 g of 5-ethylidene-2-norbornene, 25 g of styrene and 117 mL of toluene were added to a fully-dried 400-mL pressure-tight stainless reactor.

In a glove box in a nitrogen atmosphere, 0.066 mmol of dimethylanilinium tetrakis(pentafluorophenyl)borate [Me₂NHPhB(C₆F₅)₄] and 0.30 mmol of diisobutylaluminum hydride were added to the catalyst solution-1 prepared in the above, and 20 mL of toluene was added thereto to prepare a catalyst solution-2.

The catalyst solution-2 was added to the pressure-tight stainless reactor, and heated at 90°C. Next, ethylene was put into the pressure-tight stainless reactor under a pressure of 0.7 MPa to carry out copolymerization for a total of 1.5 hours at 90°C. Next, 1 mL of an isopropanol solution of 5 mass% 2,2'-methylene-bis(4-ethyl-6-t-butylphenol) (NS-5) was added to the pressure-tight stainless reactor to terminate the reaction.

Next, the copolymer was separated using a large amount of methanol, and dried in vacuum at 50°C to be a copolymer b. The yield of the resultant tercopolymer, copolymer b was 5.0 g.

### (Production Example 5: copolymer c)

In a glove box in a nitrogen atmosphere, 0.080 mmol of tris[N,N-bis(trimethylsilyl)amide]gadolinium, 0.088 mmol of 1-benzyldimethylsilyl-3-methylindene, and 0.64 mmol of trimethylaluminum were put into a glass container, and 8 mL of hexane was added thereto to give a catalyst solution-1. The catalyst solution-1 was stirred at room temperature for 72 hours.

60 g of styrene and 500 mL of toluene were added to a fully-dried 1000-mL pressure-tight stainless reactor.

In a glove box in a nitrogen atmosphere, 0.088 mmol of dimethylanilinium tetrakis(pentafluorophenyl)borate [Me₂NHPhB(C₆F₅)₄] and 0.30 mmol of diisobutylaluminum hydride were added to the catalyst solution-1 prepared in the above, and 40 mL of toluene was added thereto to prepare a catalyst solution-2. The catalyst solution-2 was added to the pressure-tight stainless reactor, and heated at 70°C.

Next, ethylene was put into the pressure-tight stainless reactor under a pressure of 1.4 MPa, and further 60 mL of a toluene solution containing 6.0 g of 1,3-butadiene was put into the pressure-tight stainless reactor, taking 4.5 hours, to carry out copolymerization for a total of 5 hours at 70°C.

Next, 1 mL of an isopropanol solution of 5 mass% 2,2'-methylene-bis(4-ethyl-6-t-butylphenol) (NS-5) was added to the pressure-tight stainless reactor to terminate the reaction.

Next, the copolymer was separated using a large amount of methanol, and dried in vacuum at 50°C to be a copolymer c. The yield of the resultant tercopolymer, copolymer c was 7.1 g.

The copolymers A to C, and a to c obtained as in the above were analyzed to measure and evaluate the content (% by mass) of the structural unit derived from ethylidene norbornene (ENB), ethylene (Et) and styrene (St) therein, and the melting point (Tm, °C), the glass transition temperature (Tg, °C), the endothermic peak energy (ΔH1, J/g), the crystallinity (Cry., %), the weight-average molecular weight, and the molecular weight distribution thereof according to the methods mentioned below.

### <Content of Ethylene, Styrene, Ethylidene Norbornene>

The content (% by mass) of the structural unit derived from ethylene, styrene, and ethylidene norbornene in the copolymer was determined by an integral ratio of each peak in ¹H-NMR spectrometry (100°C, d-tetrachloroethane standard: 6 ppm).

The styrene-derived aromatic hydrogen (5H: 7.4 to 6.4 ppm), the ethylidene norbornene bond-derived olefin hydrogen (1H: 4.8 to 5.4 ppm), and the ethylidene norbornene-derived allyl hydrogen in the copolymer were determined by the integral ratio of the respective aliphatic hydrogens (styrene (3H) + ethylidene norbornene (11H) + ethylene (4H): 1.0 to 2.8 ppm).

The copolymer c was analyzed similarly.

The calculated values are shown in Table 1.

### <Melting Point (Tm) and Glass Transition Temperature (Tg)>

The melting point and the glass transition temperature were measured through differential scanning calorimetry (DSC) according to JIS K 7121:1987.

As a result of measurement, the copolymer A and the copolymer c each were found to have two melting points (Tm).

### <Endothermic Peak Energy (ΔH1, J/g), crystallinity (Cry., %)>

The endothermic peak energy was measured using a differential scanning colorimeter (DSC, "DSCQ2000" from TA Instruments Japan Corporation), according to JIS K 7121-1987. Briefly, a copolymer sample was heated from - 150°C to 150°C at a heating rate of 10°C/min, and the endothermic peak energy (ΔH1) at 0 to 120°C at that time (1st run) was measured.

The crystallinity was measured according to the following method.

A copolymer sample was heated from -150°C to 150°C at a heating rate of 10°C/min, and the crystal melting energy (ΔH0) of a 100% crystal component, polyethylene was measured in the same manner as that for ΔH1.

From the ratio of the endothermic peak energy (ΔH1) of the copolymer to the crystal melting energy (ΔH0) of polyethylene (ΔH1/ ΔH0), the crystallinity (%) derived from the ethylene unit (non-conjugated olefin unit) was calculated.

### <Weight-Average Molecular Weight and Molecular Weight Distribution)

According to gel permeation chromatography [GPC: HLC-8121GPC/HT from Tosoh Corporation, columns: GMHHR-H(S)HT × 2, detector: differential refractometer (RI)] and based on monodispersed polystyrene, the polystyrene-equivalent weight-average molecular weight (Mw) and the molecular weight distribution (Mw/Mn) of the polymer were measured.

**Table 1**

| | Example | | | Comparative Example | | |
|---|---|---|---|---|---|---|
| Copolymer | A | B | C | a (EP35) | b | c |
| Weight-Average Molecular Weight Mw [×10³] | 78 | 107 | 320 | - | 15 | 298 |
| Molecular Weight Distribution Mw/Mn | 2.7 | 1.84 | 3.2 | - | 1.65 | 3.4 |
| Melting Point Tm [°C] | 57 | 82 | 84 | - | - | 45 |
| Glass Transition Temperature Tg [°C] | -20 | -14 | -2 | -48 | 0 | -30 |
| St[wt%] | 27.9 | 21.8 | 21.5 | 39.9 (propylene) | 41.9 | 24.8 |
| Et [wt%] | 68.3 | 76.4 | 74 | 52 | 39.5 | 68.1 |
| ENB [wt%] | 3.8 | 1.8 | 4.5 | 8.1 | 18.6 | 0 |
| Bd [wt%] | 0 | 0 | 0 | 0 | 0 | 7.1 |
| ΔH1 | 41.5 | 60 | 72 | 0 | 0 | 23 |
| Cry. [%] | 14 | 20 | 25 | 0 | 0 | 8 |

In Table 1, St [wt%] means a content (mass%) of the structural unit derived from styrene in the copolymer, Et means a content (mass%) of the structural unit derived from ethylene in the copolymer, ENB [wt%] means a content (mass%) of the structural unit derived from ethylidene norbornene, and Bd [wt%] means a content (mass%) of the structural unit derived from butadiene. ΔH1 means an endothermic peak energy. Cry. [%] means a crystallinity.

Regarding the copolymer a, the column of St [wt%] shows the content (mass%) of the structural unit derived from propylene.

In Comparative Examples a and b, the melting point, the endothermic peak energy and the crystallinity were not measured, and the reason is because the copolymers are amorphous.

### <Examples 1 to 4, and Comparative Examples 1 to 4>

Rubber compositions each having the formulation sown in Table 2 were prepared, and vulcanized at 160°C for 30 minutes. The resultant vulcanized rubber products were tested for the ozone resistance and the fracture performance according to the methods mentioned below. The results are shown in Table 3.

SBR blended in Examples and Comparative Examples in Table 3 is #1500 from JSR Corporation.

**Table 2**

| Component | Part by mass |
|---|---|
| Rubber Component | 100 |
| Oil¹⁾ | 10 |
| Silica²⁾ | 50 |
| Silane Coupling Agent³⁾ | 5 |
| Stearic Acid | 2 |
| Antiaging Agent⁴⁾ | 0.5 |
| Zinc oxide | 3 |
| Vulcanization accelerator DPG⁵⁾ | 1 |
| Vulcanization accelerator CZ⁶⁾ | 1 |
| Vulcanization accelerator DM⁷⁾ | 1 |
| Sulfur | 1.4 |

The components used in Table 2 are as follows.
1) Oil: from Sankyo Yuka Kogyo K.K., "A/O Mix"
2) Silica: from Tosoh Silica Corporation, trademark "Nipsil All"
3) Silane coupling agent: bis(3-triethoxysilylpropyl) tetrasulfide, from Degussa AG, trademark "Si69"
4) Antiaging agent: N-(1,3-dimethylbutyl)-N'-phenyl-p-phenylenediamine, from Seiko Chemical Co., Ltd., trademark "Ozonone 6C"
5) Vulcanization accelerator DPG: diphenylguanidine, from Ouchi Shinko Chemical Industrial Co., Ltd, trademark "Nocceler D"
6) Vulcanization accelerator CZ: N-cyclohexyl-2-benzothiazolylsulfenamide, from Ouchi Shinko Chemical Industrial Co., Ltd, trademark "Nocceler CZ-G"
7) Vulcanization accelerator DM: di-2-benzothiazolyl disulfide, from Ouchi Shinko Chemical Industrial Co., Ltd, trademark "Nocceler DM-P"

### <Ozone Resistance (weather resistance) (kinematic)>

According to JIS K 6259:2004, the ozone resistance of the resultant vulcanized rubber was determined.

While given 20% kinematic elongation, the strip specimen was exposed to 40°C under the condition of ozone concentration of 50 pphm, and the condition of the specimen (presence or absence of cracks) after 200 hours was investigated visually.

### <High-Temperature Fracture Performance>

According to JIS K 6251:2010, samples were tested in a tensile test at high temperature (100°C) to measure the rupture strength (Tb) thereof. Based on the measured value of Comparative Example 1, 100, the measured value of each rubber composition was expressed as an index. Samples having a larger index value have better high-temperature fracture performance and are more excellent in fracture resistance.

**Table 3**

| | Example | | | | Comparative Example | | | |
|---|---|---|---|---|---|---|---|---|
| | 1 | 2 | 3 | 4 | 1 | 2 | 3 | 4 |
| Kind of Copolymer | A | B | C | C | a (EP35) | b | c | c |
| Compounding Amount of Copolymer | 30 | 30 | 50 | 100 | 30 | 30 | 50 | 100 |
| Compounding Amount of #1500 | 70 | 70 | 50 | 0 | 70 | 70 | 50 | 0 |
| High-Temperature Fracture Performance (Tb index) | 105 | 112 | 132 | 156 | 100 | 71 | 128 | 152 |
| Ozone Resistance (kinematic) Presence or absence of cracks after 200 hours | No crack | No crack | No crack | No crack | No crack | No crack | Cracked | Cracked |

From Table 3 and as in Examples 1 to 4, crosslinked rubber compositions and rubber products satisfying both fracture performance and weather resistance were obtained using the multicomponent copolymers of the present invention, as compared with conventional olefinic rubber (EPDM).

In addition, from Comparative Example 2, it is known that even a copolymer having a non-conjugated polyene unit, a non-conjugated olefin unit and an aromatic vinyl unit could not have excellent performance when the content of the aromatic vinyl unit therein does not satisfy the range of the present invention.

### Industrial Applicability

According to the present invention, there can be provided a multicomponent copolymer that contributes toward improving the durability and weather resistance of rubber compositions and rubber products such as tires. In addition, according to the present invention, there can be provided a rubber composition and a tire that can be produced with high workability and have high durability and weather resistance.

## Claims

1. A multicomponent copolymer comprising a non-conjugated polyene unit, a non-conjugated olefin unit and an aromatic vinyl unit, wherein:
the non-conjugated olefin unit is an ethylene unit alone,
the non-conjugated polyene unit comprises at least one selected from a group consisting of a vinylnorbornene unit and an ethylidene-norbornene unit,
the aromatic vinyl unit comprises a styrene unit,
the content of the non-conjugated polyene unit is 1% by mass or more and 20% by mass or less,
the content of the non-conjugated olefin unit is more than 50% by mass and 94% by mass or less,
the content of the aromatic vinyl unit is 5% by mass or more and less than 30% by mass, and
a melting point of the multicomponent copolymer measured through differential scanning calorimetry according to JIS K 7121:1987 is 50°C or higher.

2. The multicomponent copolymer according to claim 1, wherein the weight-average molecular weight of the multicomponent copolymer is 5,000 to 1,000,000.

3. The multicomponent copolymer according to claim 1 or 2, wherein a crystallinity of the multicomponent copolymer as determined according to a method described in the description is 0.5 to 50%.

4. A rubber composition comprising the multicomponent copolymer of any one of claims 1 to 3.

5. A crosslinked rubber composition produced by crosslinking the rubber composition of claim 4.

6. A rubber product using the rubber composition of claim 4 or the crosslinked rubber composition of claim 5.

7. A tire using the rubber composition of claim 4 or the crosslinked rubber composition of claim 5.

## Patentansprüche

1. Multikomponentencopolymer umfassend eine nichtkonjugierte Polyeneinheit, eine nichtkonjugierte Olefineinheit und eine aromatische Vinyleinheit, wobei:
die nichtkonjugierte Olefineinheit eine Ethyleneinheit als solche ist,
die nichtkonjugierte Polyeneinheit mindestens eines umfasst ausgewählt aus einer Gruppe bestehend aus einer Vinylnorborneneinheit und einer Ethylidennorborneneinheit,
die aromatische Vinyleinheit eine Styroleinheit umfasst,
der Gehalt der nichtkonjugierten Polyeneinheit 1 Masse-% oder mehr und 20 Masse-% oder weniger beträgt,
der Gehalt der nichtkonjugierten Olefineinheit mehr als 50 Masse-% und 94 Masse-% oder weniger beträgt,
der Gehalt der aromatischen Vinyleinheit 5 Masse-% oder mehr und weniger als 30 Masse-% beträgt,
ein Schmelzpunkt des Multikomponentencopolymers, durch Differential-Scanning-Kalorimetrie JIS K 7121:1987 entsprechend gemessen, 50 °C oder mehr beträgt.

2. Multikomponentencopolymer nach Anspruch 1, wobei das gewichtsdurchschnittliche Molekulargewicht des Multikomponentencopolymers 5 000 bis 1 000 000 beträgt.

3. Multikomponentencopolymer nach Anspruch 1 oder 2, wobei eine Kristallinität des Multikomponentencopolymers, wie einem in der Beschreibung beschriebenen Verfahren entsprechend bestimmt, 0,5 bis 50 % beträgt.

4. Kautschukzusammensetzung umfassend das Multikomponentencopolymer nach einem der Ansprüche 1 bis 3.

5. Vernetzte Kautschukzusammensetzung, die durch Vernetzen der Kautschukzusammensetzung nach Anspruch 4 hergestellt wird.

6. Kautschukprodukt, das die Kautschukzusammensetzung nach Anspruch 4 oder die vernetzte Kautschukzusammensetzung nach Anspruch 5 benutzt.

7. Reifen, das die Kautschukzusammensetzung nach Anspruch 4 oder die vernetzte Kautschukzusammensetzung nach Anspruch 5 benutzt.

## Revendications

1. Copolymère à composants multiples comprenant un motif de polyène non conjugué, un motif d'oléfine non conjugué et un motif de vinyle aromatique, dans lequel :
le motif d'oléfine non conjugué est un motif d'éthylène seul,
le motif de polyène non conjugué comprend au moins l'un sélectionné parmi un groupe constitué d'un motif vinylnorbornène et d'un motif éthylidène-norbornène,
le motif de vinyle aromatique comprend un motif styrène,
la teneur du motif de polyène non conjugué est de 1 % en masse ou plus et de 20 % en masse ou moins,
la teneur du motif d'oléfine non conjugué est supérieure à 50 % en masse et de 94 % en masse ou moins,
la teneur du motif de vinyle aromatique est de 5 % en masse ou plus et inférieure à 30 % en masse, et
un point de fusion du copolymère à composants multiples mesuré par calorimétrie différentielle à balayage selon la norme JIS K 7121:1987 est de 50 °C ou plus.

2. Copolymère à composants multiples selon la revendication 1, dans lequel le poids moléculaire moyen en poids du copolymère à composants multiples est de 5 000 à 1 000 000.

3. Copolymère à composants multiples selon la revendication 1 ou 2, dans lequel une cristallinité du copolymère à composants multiples, telle que déterminée selon un procédé décrit dans la description, est de 0,5 à 50 %.

4. Composition de caoutchouc comprenant le copolymère à composants multiples selon l'une quelconque des revendications 1 à 3.

5. Composition de caoutchouc réticulée produite par réticulation de la composition de caoutchouc selon la revendication 4.

6. Produit de caoutchouc utilisant la composition de caoutchouc selon la revendication 4 ou la composition de caoutchouc réticulée selon la revendication 5.

7. Pneumatique utilisant la composition de caoutchouc selon la revendication 4 ou la composition de caoutchouc réticulée selon la revendication 5.
